# EUROPEAN PATENT APPLICATION

(11) **EP 2 009 742 A1**
(43) Date of publication of application: **31.12.2008**
(21) Application number: 07738050.9
(22) Date of filing: 08.03.2007
(51) Int. Cl.: H01Q 21/08, B60R 11/02, B60R 21/00, G01S 7/03, G01S 13/93, H01Q 3/24, H01Q 7/00, H01Q 13/08, H01Q 19/10

(54) **ANTENNA ASSEMBLY, MONITOR, AND VEHICLE**

(30) Priority: 17.04.2006 JP 2006113874
(71) Applicant: Panasonic Corporation, Kadoma-shi Osaka 571-8501 (JP)
(72) Inventor: YOSHIDA, Takashi c/o Matsushita Electr.Ind.Co.Ltd., Chuo-ku, Osaka 540-6207 (JP); NAKANISHI, Tomoya c/o Matsushita Electr.Ind.Co.Ltd., Chuo-ku, Osaka 540-6207 (JP)
(74) Representative: Grünecker, Kinkeldey, Stockmair & Schwanhäusser Anwaltssozietät
(86) International application number: PCT/JP2007/054560
(87) International publication number: WO 2007/119317

(57) **Abstract**

The present invention provides a low-cost antenna device which has no mechanical operating portion and is capable of forming multiple beam directions over a large area. The antenna device includes multiple antenna elements 600 and 610 formed on a dielectric substrate 630 and including a feeding portion respectively and a reflector 620 including multiple reflective portions opposed to each of the antenna elements 600 and 610 respectively. Each of the reflective portions is parallel with the opposed antenna elements 600 and 610, and a beam direction of each of the antenna elements 600 and 610 is rendered mutually different regarding each of the antenna elements 600 and 610 by differentiating a distance between each of the antenna elements 600 and 610 and the opposed reflective portion as to an elevation angle with reference to the dielectric substrate 630 on which each of the antenna elements 600 and 610 is formed. Broad directivity is realized by combining the beam directions in which the elevation angle of each of the antenna elements 600 and 610 is different.

## Description

### Technical Field

The present invention relates to an antenna device which utilizes multiple beams and a monitoring device and a vehicle which utilize the antenna device. For instance, the present invention relates to a miniaturized planar antenna device which is applicable to an in-vehicle radar antenna or the like and a monitoring device and a vehicle which utilize the antenna device.

### Background Art

Conventionally, there has been a demand for an antenna which can accurately detect a position of an obstacle over a large area for a vehicle monitoring device and the like which detect the obstacle lying in a traveling direction of an automobile. For that purpose, multiple beams must face different directions over the large area.

To have the multiple beams facing different directions, multiple antenna devices may be installed so that their beam directions become mutually different. In that case, however, multiple antenna devices are required and have to be individually installed, where it is cumbersome to install the multiple antenna devices by adjusting their respective beam directions.

As another configuration having multiple beams facing different directions over a large area, there is a known type of antenna device which switches a main beam direction. One of the representative examples of the antenna device which can switch the main beam direction is a mechanical beam scanning antenna device. The mechanical beam scanning antenna device controls the main beam direction by mechanically turning an antenna which has an antenna lobe sharply focused within a plane at a search angle.

Another representative example of the antenna device which can switch the main beam direction is an electronic beam scanning antenna device (refer to Patent Document 1 and Non-patent Document 1 for instance). The electronic beam scanning antenna device controls the beam direction or a radiation pattern by a relative phase of an excitation coefficient of an antenna element.

Figure 29 shows a block diagram of an electronic beam scanning antenna device disclosed in Patent Document 1. The electronic beam scanning antenna device is mounted at the front of a mobile object such as an automobile, and switches a radiation direction of a radio beam according to the traveling direction of the mobile object.

The electronic beam scanning antenna device includes a phased array antenna composed of multiple antenna elements 91₁, 91₂ and so on and multiple phase shifters 92₁, 92₂ and so on provided correspondingly to the respective antenna elements 91₁, 91₂ and so on. The antenna device also includes a traveling direction detection device 93 composed of a rotation angle gauge of a steering, a transverse acceleration meter and the like and a switching device 94 for switching the beam direction of the phased array antenna. The antenna device also includes a transmitter-receiver 95 which creates a transmitting signal of a radio wave radiated from the phased array antenna and also receives and processes a receiving signal composed of a reflected wave received by the phased array antenna.

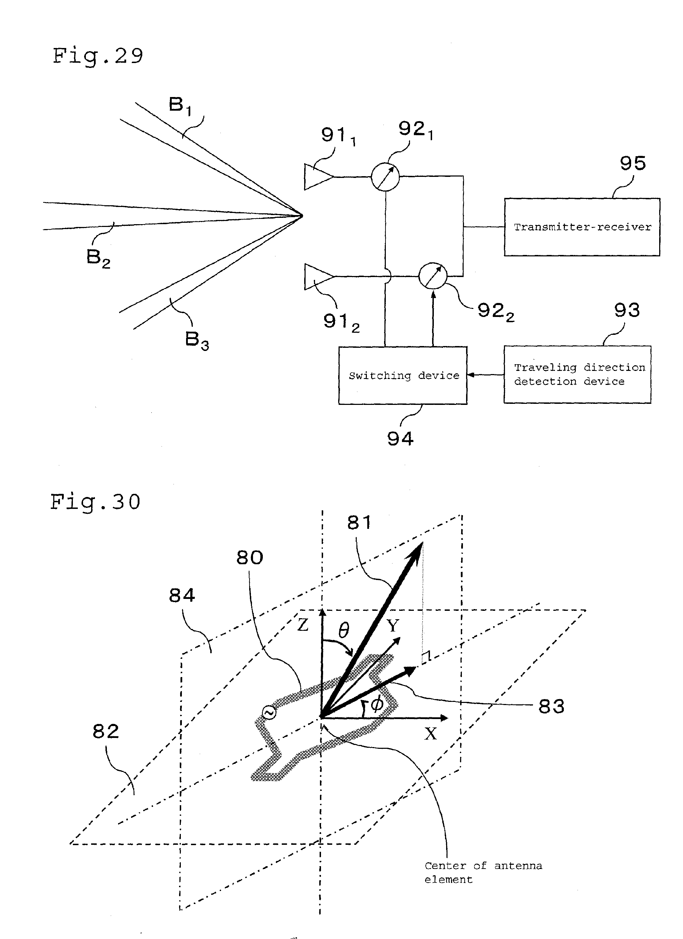

The switching device 94 is controlled by a control signal outputted from the traveling direction detection device 93 and adjusts phase shift amounts of the phase shifters 92₁, 92₂ and so on so as to switch a radio beam B emitted from the phased array antenna to have't face the traveling directions of the automobile, such as B₁, B₂ and B₃ shown in Figure 29.

There is also a known antenna device which forms multiple beam directions over a large area by placing multiple antenna elements. For instance, there is a known antenna device which sterically (conically) forms the radiation direction of the beam (refer to Patent Document 2 for instance).

The antenna device disclosed in Patent Document 2 has multiple antenna elements of which elevation angles of the main beams to a plane formed by the antenna elements are equal placed on the same plane so that horizontal orientations of their respective main beams are different. With such a configuration, the antenna device realizes formation of the beam directions over a large area by conically forming the radiation directions of the beams.

According to the specification, the plane formed by the antenna elements is a "horizontal plane," and the "elevation angle" is an angle to an axis perpendicular to the horizontal plane. Therefore, the horizontal orientation is the orientation on the plane formed by the antenna elements.

A description will be given by using Figure 30 as to the "elevation angle" and a "horizontal direction" of the specification. Reference numeral 82 denotes a plane on which an antenna element 80 is formed. The plane is referred to as the horizontal plane of the antenna element 80 in the specification. The orientation on the horizontal plane 82 of a main beam direction 81 emitted from the antenna element 80 is referred to as a horizontal direction 83 of the beam. On a plane 84 which is perpendicular to the horizontal plane 82 and includes the horizontal direction 83 of the beam, an angle θ which is made by the main beam direction 81 with the axis perpendicular to the horizontal plane 82 is referred to as the "elevation angle." And on the plane 84 which is perpendicular to the horizontal plane 82 and includes the main beam direction 81, the orientation of the main beam direction 81 is referred to as an "elevation angle direction."

To be more specific, as shown Figure 30, in the case of defining coordinate axes wherein the center of the antenna element is an origin of coordinates, a symmetric axis rendering the antenna element symmetric is a Y-axis, and the horizontal plane 82 formed by the antenna element is an X to Y plane, the orientation of the main beam direction 81 on the X to Y plane at the angle φ from an X-axis is the horizontal direction 83 of the beam. And the elevation angle θ is the angle made by the main beam direction 81 with a Z-axis on the plane 84 which is perpendicular to the X to Y plane 82 and includes the horizontal direction 83 of the beam. Moreover, Figure 30 shows the case where an angle φ of the horizontal direction 83 of the beam from the X-axis is approximately 50°.
Patent Document 1: Japanese Patent Laid-Open No. 2-287180
Patent Document 2: Japanese Patent Laid-Open No. 2005-72915
Non-patent Document 1: "Radar Technology (Revised)" editorial supervisor: Takashi Yoshida, pp. 117 to 137, Institute of Electronics, Information and Communication Engineers, Oct. 1, 1996

### Disclosure of the Invention

### Problems to be Solved by the Invention

As for the conventional mechanical beam scanning antenna device, however, the antenna itself or a part such as a feeding horn constituting the antenna device is mechanically rotated. Therefore, to describe many problems thereof, mechanical wastage occurs, a relatively long time is required based on inertia of a mobile mass, a mechanical driving unit requires cost, and the size becomes larger.

On the other hand, the electronic beam scanning antenna device had a problem that implementation cost becomes high because a large number of phase controllers are required.

Furthermore, as to the antenna device of Patent Document 2 including multiple antenna elements for forming multiple main beams in the directions where only the horizontal direction is different, there was a problem that it only has a function only different in the horizontal direction so that the main beams were not formed in various elevation angle directions.

The present invention solves the above-mentioned conventional problems, and an object thereof is to provide an antenna device which has no mechanical operating portion, is low-cost and has multiple beam directions in different elevation angle directions over a large area and a monitoring device and a vehicle which utilize the antenna device.

### Advantages of the Invention

The 1^{st} aspect of the present invention is an antenna device including multiple antenna elements having a feeding portion respectively and multiple reflective portions opposed to each of the multiple antenna elements respectively, wherein:
each of the antenna elements is a conductor on each dielectric substrate and is formed on the same plane or on one of mutually parallel planes, and each of the antenna elements includes a loop element symmetrically placed like a loop with reference to a predetermined symmetric axis and a pair of alternative elements provided on the loop element on the symmetric axis;
the feeding portion is provided on the loop element on at least one side to the symmetric axis;
the symmetric axes of the antenna elements are mutually in the same direction;
each of the reflective portions is on the plane mutually parallel with each of the opposed antenna elements;
a distance between each of the antenna elements and each of the opposed reflective portions is different as to each of the antenna elements; and
a beam direction of each of the multiple antenna elements is mutually different since the distance from the reflector is different as to an elevation angle with reference to an axis perpendicular to the plane on which each of the antenna elements is formed.

The 2^{nd} aspect of the present invention is the antenna device according to the 1^{st} aspect of the present invention, wherein:
each of the antenna elements has the loop element and the pair of alternative elements formed by a slot which is formed by denudating a part of a conductor layer formed on a front face of each of the dielectric substrates; and
the feeding portion is provided in proximity to a predetermined position on the loop element on at least one side to the symmetric axis instead of the one provided on the loop element.

The 3^{rd} aspect of the present invention is the antenna device according to the 1^{st} aspect of the present invention or the 2^{nd} aspect of the present invention, wherein the multiple reflective portions are composed of one reflector.

The 4^{th} aspect of the present invention is the antenna device according to the 1^{st} aspect of the present invention or the 2^{nd} aspect of the present invention, wherein:
the loop element is in a rhombic shape which has a part corresponding to an opposed vertex on the symmetric axis;
one side of the rhombic shape of the loop element is a 1/4 to 3/8 wavelength long; and
each of the pair of alternative elements is a 1/4 wavelength long, and is a projected portion in a folded shape provided toward inside or outside of the rhombic shape from the part corresponding to the vertex.

The 5^{th} aspect of the present invention is the antenna device according to the 1^{st} aspect of the present invention or the 2^{nd} aspect of the present invention, wherein:
the antenna element is composed of multiple component portions;
each of the component portions includes a loop part symmetrically placed like a loop with reference to the predetermined symmetric axis and a pair of alternative parts provided on the loop part to face outside of the loop part on the symmetric axis; and
each of the component portions is configured on the symmetric axis by mutually connecting the alternative parts.

The 6^{th} aspect of the present invention is the antenna device according to the 5^{th} aspect of the present invention, wherein the number of the component portions of the antenna element is different as to each of the antenna elements.

The 7^{th} aspect of the present invention is the antenna device according to the 2^{nd} aspect of the present invention, wherein:
a micro strip line is provided on a backside of the dielectric substrate;
the loop element and the micro strip line are opposed by sandwiching the dielectric substrate in proximity to the predetermined position in which the feeding portion is provided;
each of the antenna elements includes a plurality of the feeding portions;
the antenna device further includes a feeding switching portion for switching the feeding portion for performing feeding out of the plurality of the feeding portions included in each of the antenna elements; and
the feeding switching portion is provided at a distance of an odd multiple of a 1/4 wavelength from the predetermined position on the micro strip line, and switches between short circuiting and feeding as to each of the feeding portions.

The 8^{th} aspect of the present invention is the antenna device according to the 2^{nd} aspect of the present invention, wherein:
a micro strip line is provided on the backside of the dielectric substrate;
the loop element and the micro strip line are opposed by sandwiching the dielectric substrate in proximity to the predetermined position in which the feeding portion is provided;
each of the antenna elements includes a plurality of the feeding portions;
the antenna device further includes a feeding switching portion for switching the feeding portion for performing feeding out of the plurality of the feeding portions included in each of the antenna elements; and
the feeding switching portion is provided at a distance of an integral multiple of a 1/2 wavelength from the predetermined position on the micro strip line, and switches between opening and feeding as to each of the feeding portions.

The 9^{th} aspect of the present invention is a monitoring device for sending a radio wave and receiving a radio wave reflected by the radio wave to detect an object or a human body as a subject, comprising:
a transmission antenna portion which sends a wide-angle single-beam radio wave or radio waves in multiple beam directions in a narrower range than that;
a reception antenna portion which includes the antenna device according to the 1^{st} aspect of the present invention or the 2^{nd} aspect of the present invention and receives the radio waves transmitted by the transmission antenna portion and reflected by the subject in multiple beam directions;
a transmission portion which transmits a signal to be sent as the radio wave to the transmission antenna portion;
a receiving portion which has the radio wave received by the reception antenna portion transmitted as a signal from the reception antenna portion so as to detect it; and
a beam switching portion which controls switching of a feeding portion for performing feeding out of a plurality of the feeding portions included in multiple antenna elements of the antenna device and switches a direction of the radio wave to be received by the reception antenna portion so as to control a monitoring area.

The 10^{th} aspect of the present invention is the monitoring device according to the 9^{th} aspect of the present invention, wherein:
the transmission antenna portion includes the antenna device according to the 1^{st} aspect of the present invention or the 2^{nd} aspect of the present invention and sends the radio waves in multiple beam directions in a narrower range than the wide-angle single-beam radio wave; and
the beam switching portion also controls switching of the feeding portion for performing feeding out of a plurality of the feeding portions included in the multiple antenna elements of the antenna device included in the transmission antenna portion and switches the direction of the radio wave sent by the transmission antenna portion so as to control the monitoring area.

The 11^{th} aspect of the present invention is a vehicle on which the monitoring device according to the 9^{th} aspect of the present invention or the 10^{th} aspect of the present invention is mounted.

The 12^{th} aspect of the present invention is the vehicle according to the 11^{th} aspect of the present invention, wherein the monitoring device is mounted in a position for monitoring the front of the vehicle in a direction in which the beam direction is switchable from side to side in front of the vehicle.

According to the present invention, the distance between the antenna element and a reflector is different as to each individual antenna element so as to differentiate the elevation angle of the main beam emitted from each individual antenna element. Therefore, the present invention can provide an antenna device which has no mechanical operating portion, is low-cost and has multiple beam directions in different elevation angle directions over a large area and a monitoring device and a vehicle which utilize the antenna device.

### Brief Description of the Drawings

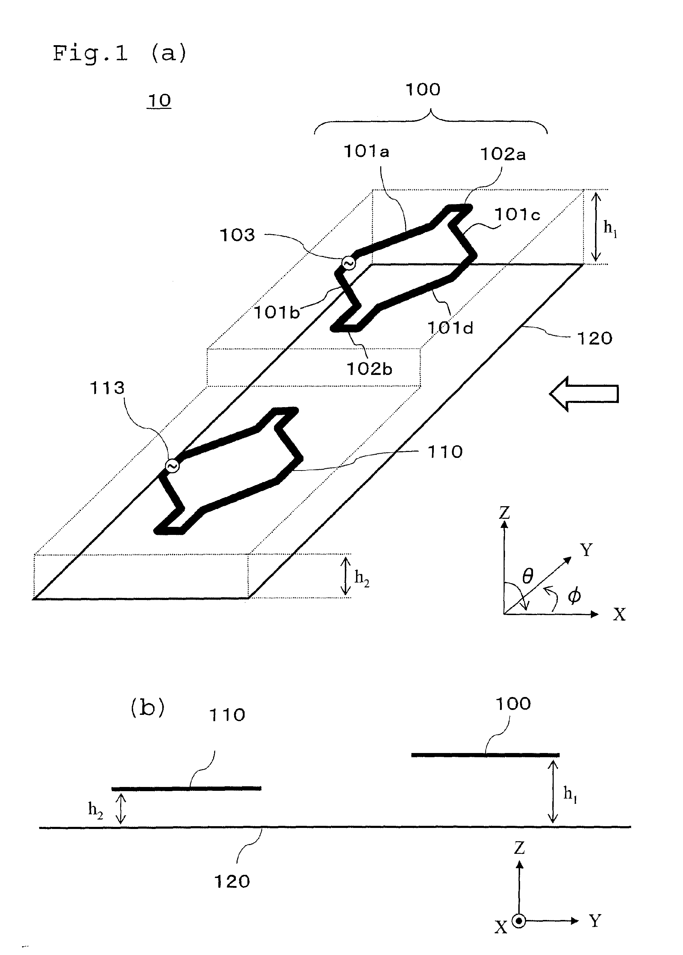

Figure 1(a) is a perspective view showing a configuration of an antenna device according to a first embodiment of the present invention, and Figure 1(b) is an arrow view showing the configuration of the antenna device according to the first embodiment of the present invention;

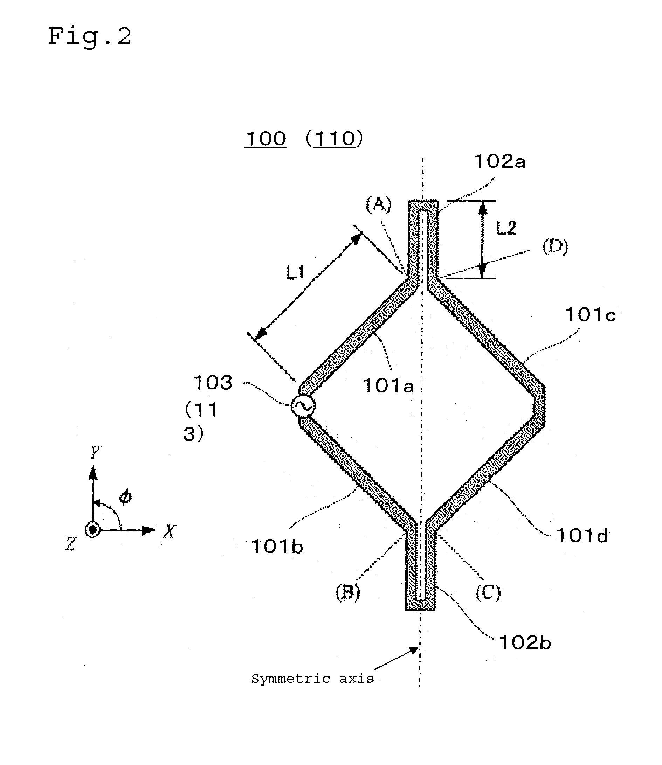

Figure 2 is a plan view of a linear loop antenna with detour elements of the antenna device according to the first embodiment of the present invention viewed from a + Z-axis direction;

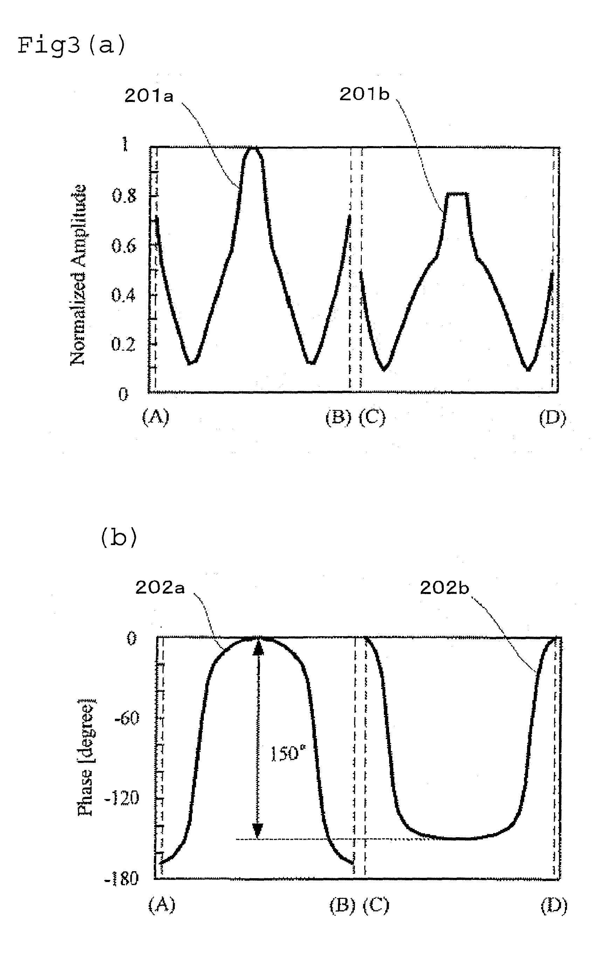

Figure 3(a) is a diagram showing a current amplitude characteristic on a linear loop antenna with detour elements constituting the antenna device according to the first embodiment of the present invention, and Figure 3(b) is a diagram showing a current phase characteristic on the linear loop antenna with detour elements constituting the antenna device according to the first embodiment of the present invention;

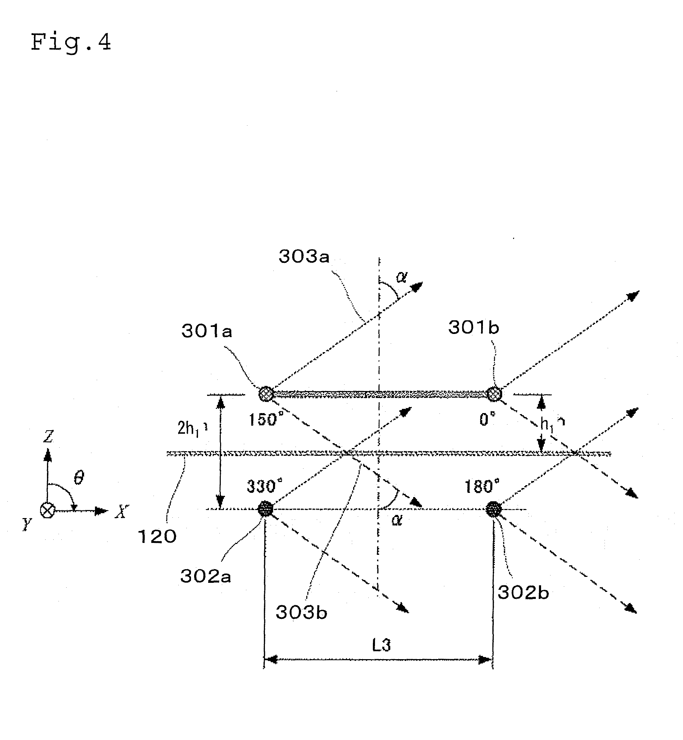

Figure 4 is a schematic diagram showing a point wave source model of operation of the linear loop antenna with detour elements constituting the antenna device according to the first embodiment of the present invention;

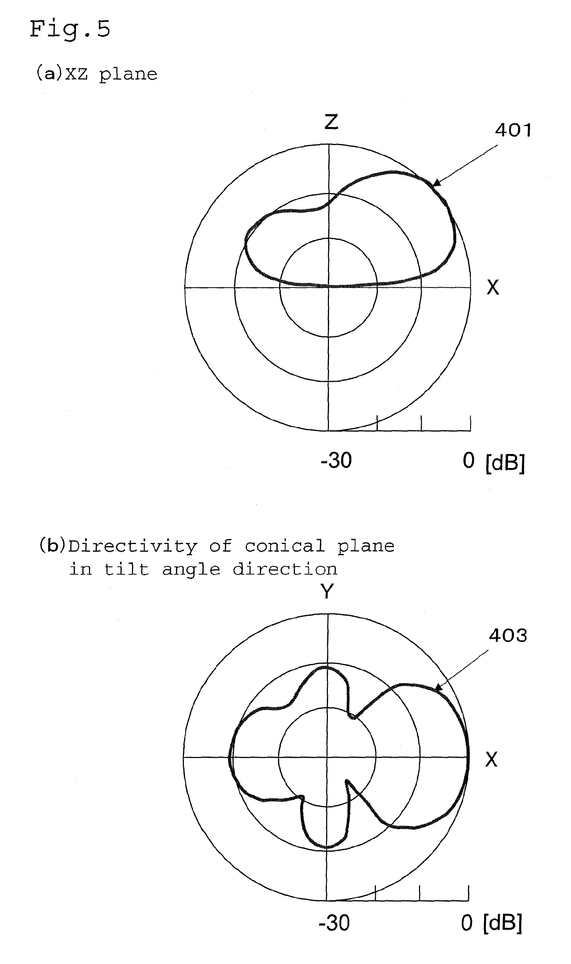

Figure 5(a) is a diagram showing directivity of a vertical plane (XZ plane) of a linear loop antenna with detour elements 100 constituting the antenna device according to the first embodiment of the present invention, and Figure 5(b) is a diagram showing the directivity of a conical plane in a tilt angle direction of the linear loop antenna with detour elements 100 constituting the antenna device according to the first embodiment of the present invention;

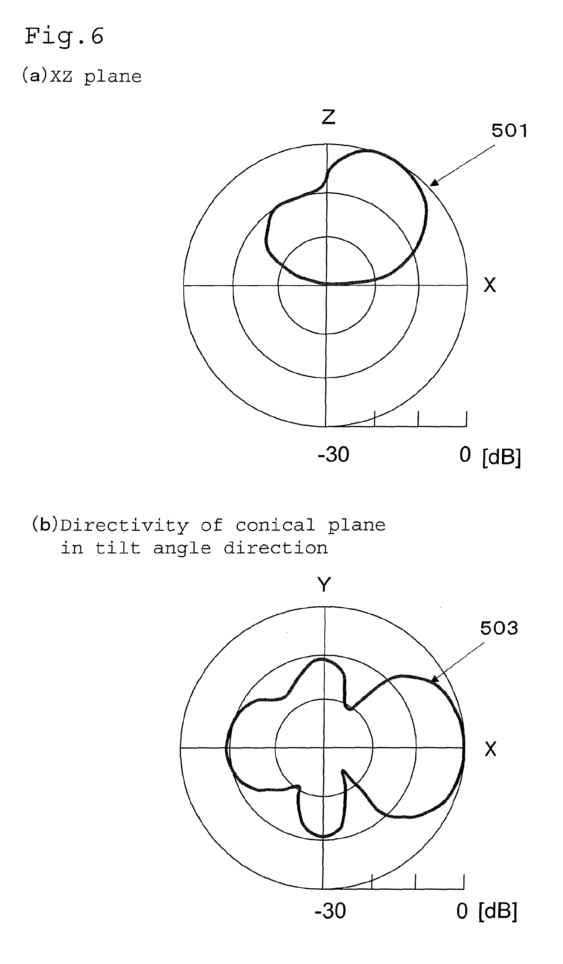

Figure 6(a) is a diagram showing directivity of a vertical plane (XZ plane) of a linear loop antenna with detour elements 110 constituting the antenna device according to the first embodiment of the present invention, and Figure 6(b) is a diagram showing the directivity of the conical plane in a tilt angle direction of the linear loop antenna with detour elements 110 constituting the antenna device according to the first embodiment of the present invention;

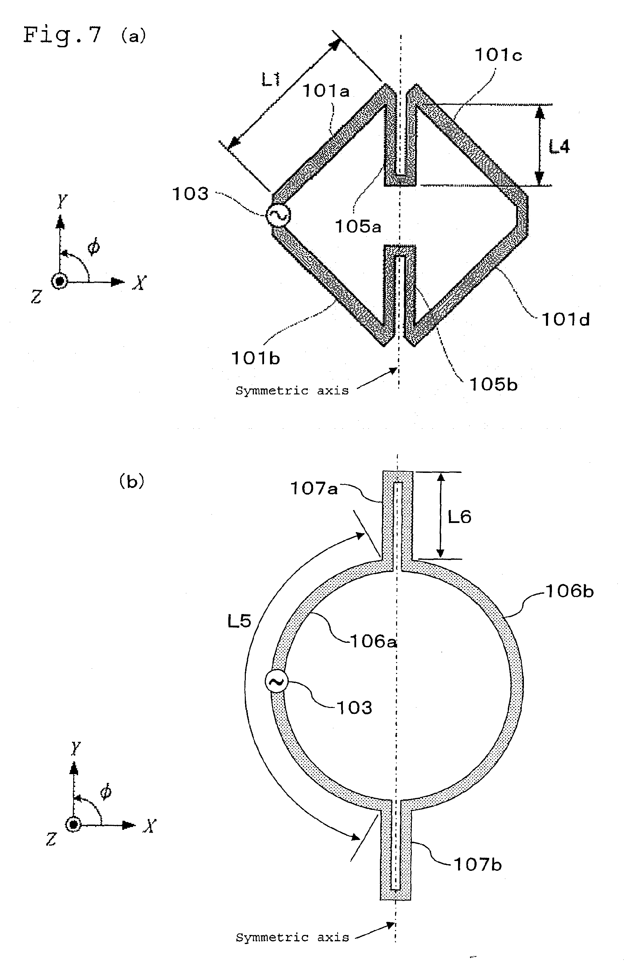

Figure 7(a) is a plan view of the linear loop antenna with detour elements of another configuration according to the first embodiment of the present invention viewed from the + Z direction; and Figure 7(b) is a plan view of the linear loop antenna with detour elements of another configuration according to the first embodiment of the present invention viewed from the + Z direction;

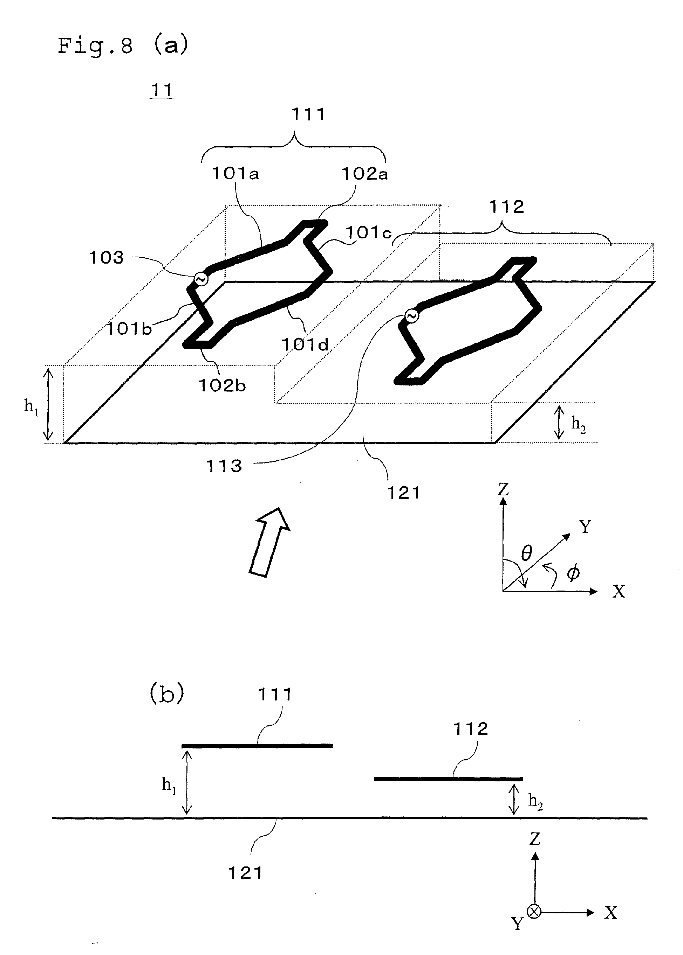

Figure 8(a) is a perspective view showing the configuration of the antenna device according to a second embodiment of the present invention, and Figure 8(b) is an arrow view showing the configuration of the antenna device according to the second embodiment of the present invention;

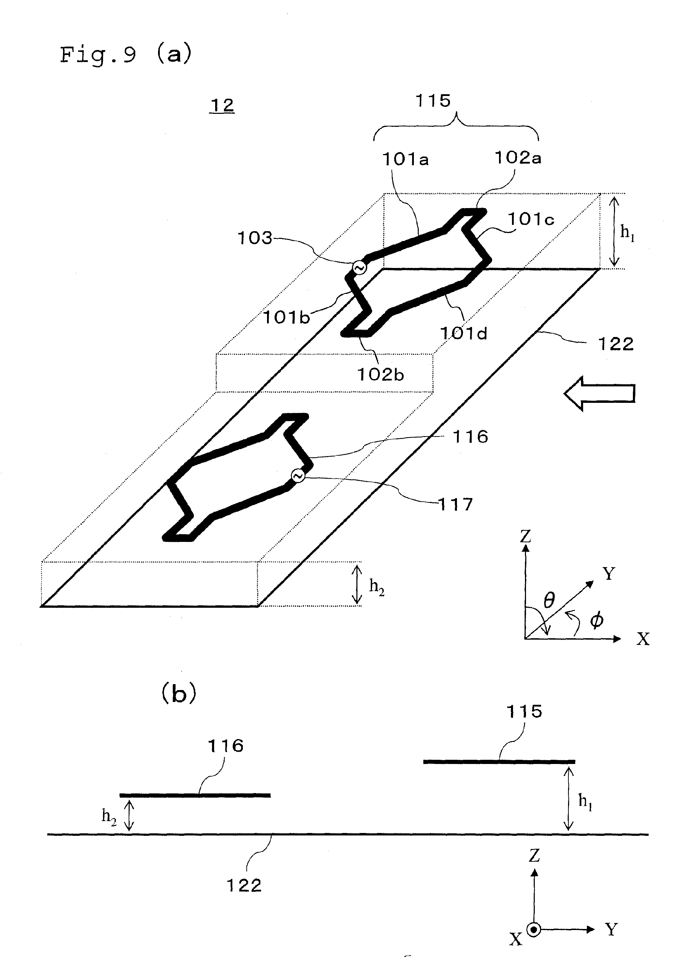

Figure 9(a) is a perspective view showing the configuration of the antenna device of another configuration according to the second embodiment of the present invention, and Figure 9(b) is an arrow view showing the configuration of the antenna device of another configuration according to the second embodiment of the present invention;

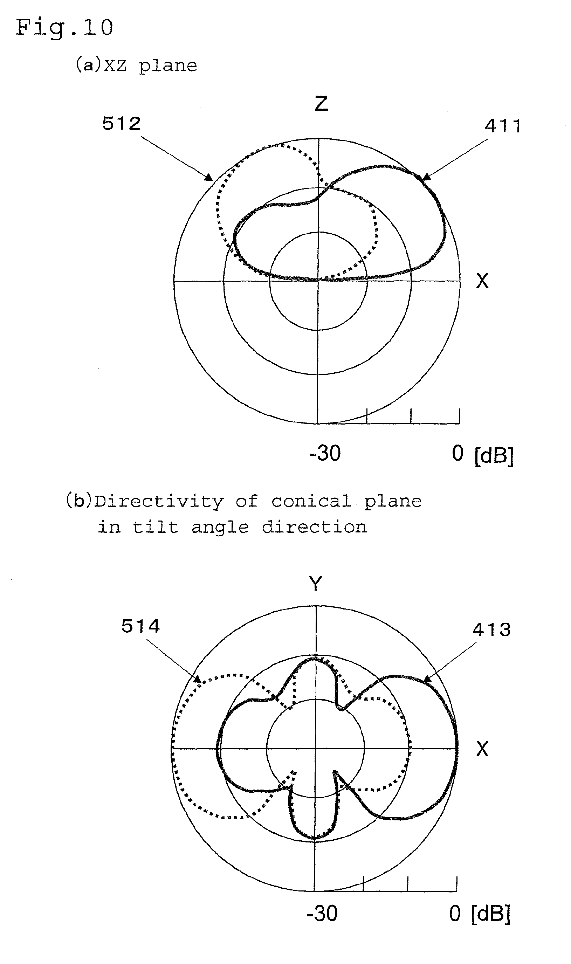

Figure 10(a) is a diagram showing directivity of the vertical plane (XZ plane) of the linear loop antenna with detour elements constituting the antenna device according to the second embodiment of the present invention, and Figure 10(b) is a diagram showing the directivity of the conical plane in the tilt angle direction of the linear loop antenna with detour elements constituting the antenna device according to the second embodiment of the present invention;

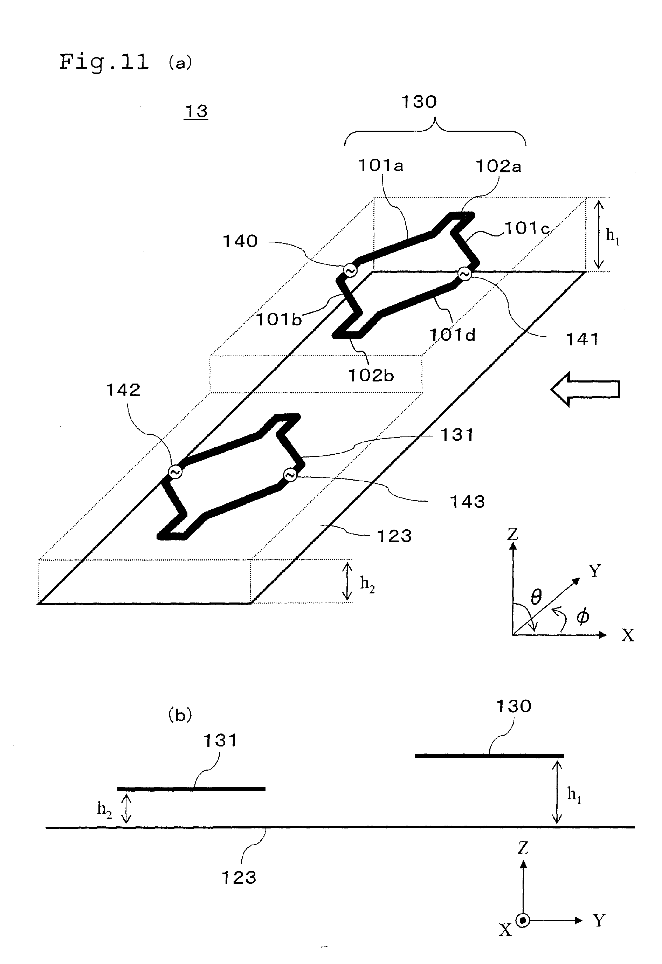

Figure 11(a) is a perspective view showing the configuration of the antenna device according to a third embodiment of the present invention, and Figure 11(b) is an arrow view showing the configuration of the antenna device according to the third embodiment of the present invention;

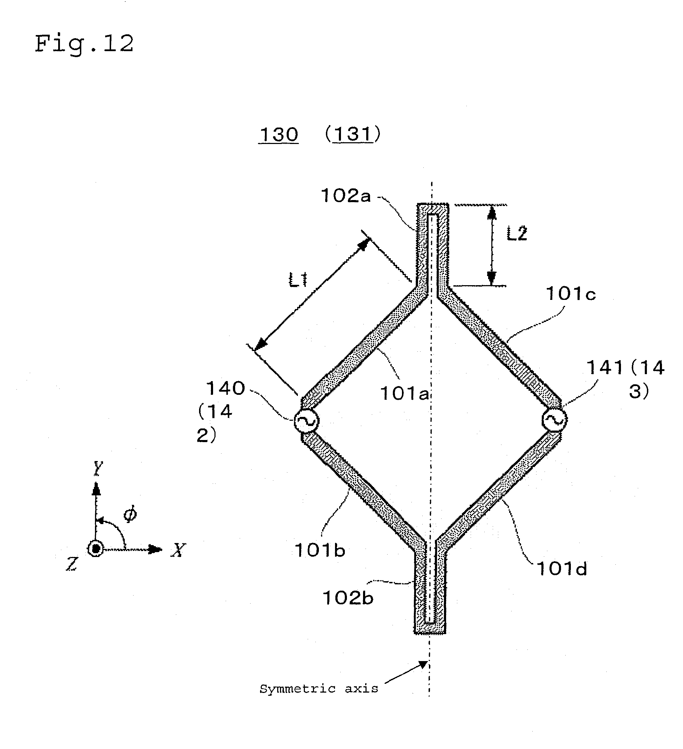

Figure 12 is a plan view of the linear loop antenna with detour elements of the antenna device according to the third embodiment of the present invention viewed from the + Z-axis direction;

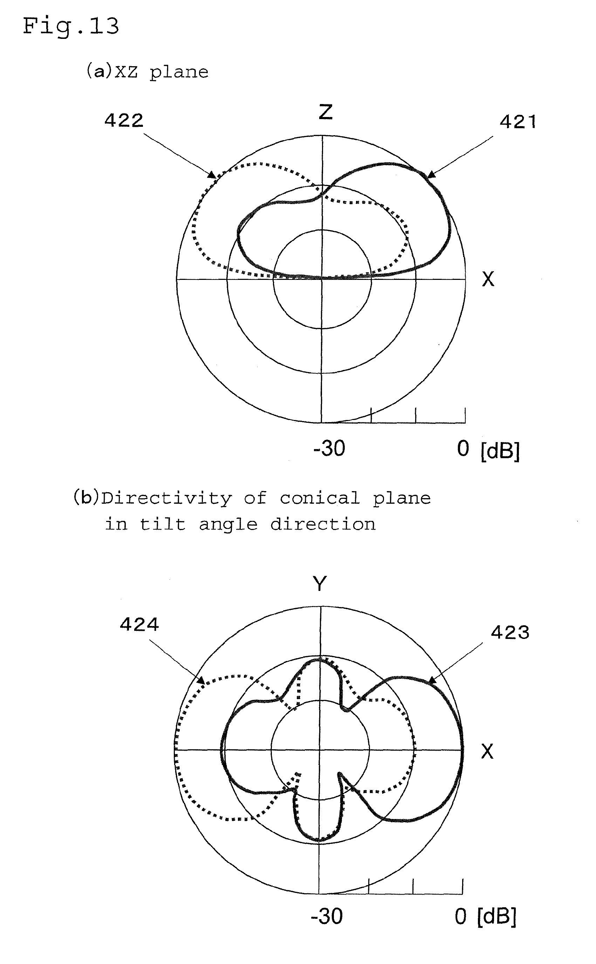

Figure 13(a) is a diagram showing the directivity of the vertical plane (XZ plane) of a linear loop antenna with detour elements 130 constituting the antenna device according to the third embodiment of the present invention, and Figure 13(b) is a diagram showing the directivity of the conical plane in the tilt angle direction of the linear loop antenna with detour elements 130 constituting the antenna device according to the third embodiment of the present invention;

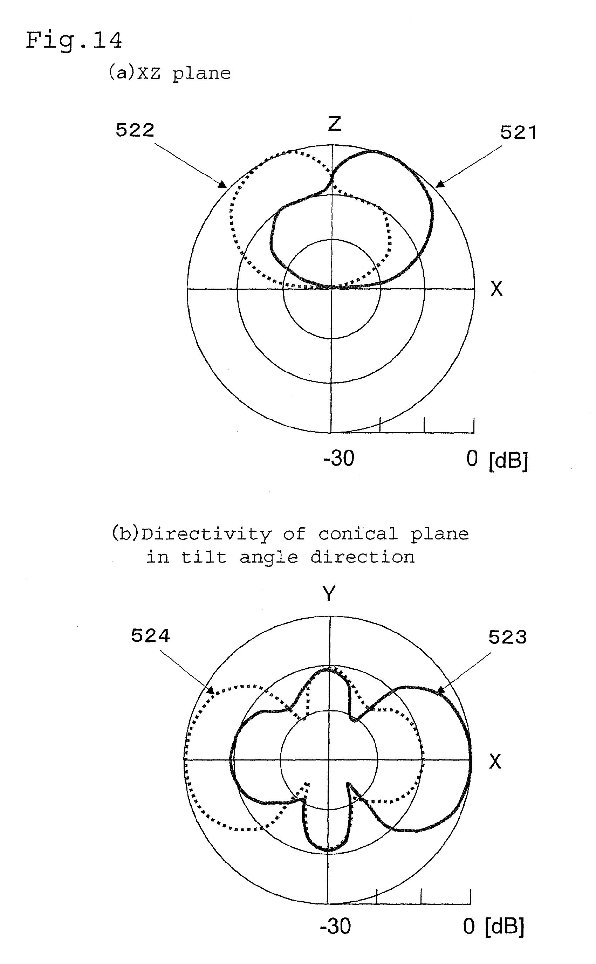

Figure 14(a) is a diagram showing the directivity of the vertical plane (XZ plane) of another linear loop antenna with detour elements 131 constituting the antenna device according to the third embodiment of the present invention, and Figure 14(b) is a diagram showing the directivity of the conical plane in the tilt angle direction of another linear loop antenna with detour elements 131 constituting the antenna device according to the third embodiment of the present invention;

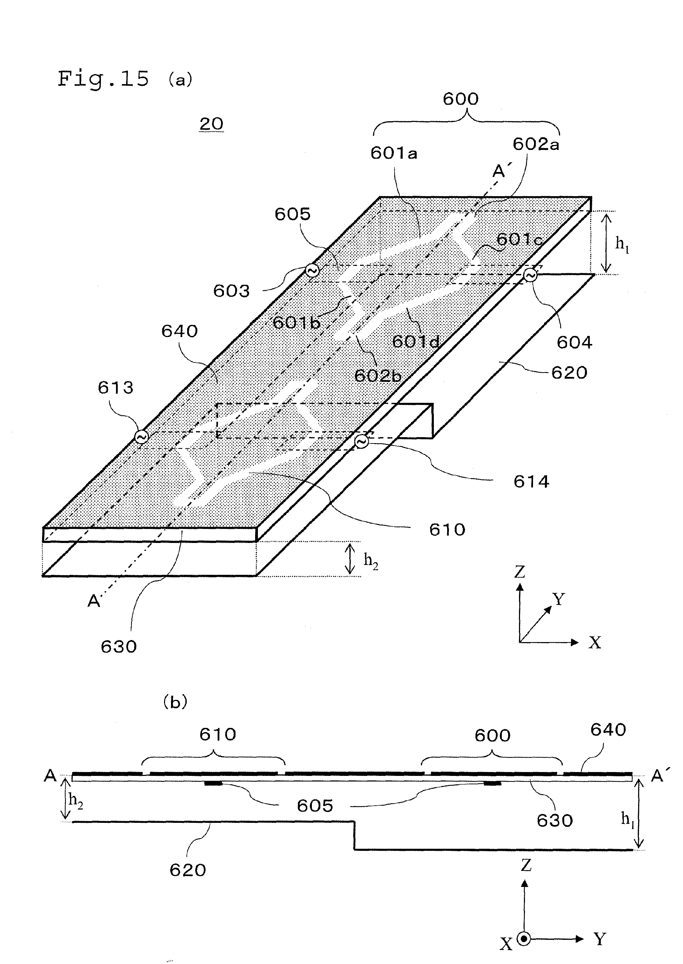

Figure 15(a) is a perspective view showing the configuration of the antenna device according to a fourth embodiment of the present invention, and Figure 15(b) is an A to A' sectional view of the antenna device according to the second embodiment of the present invention;

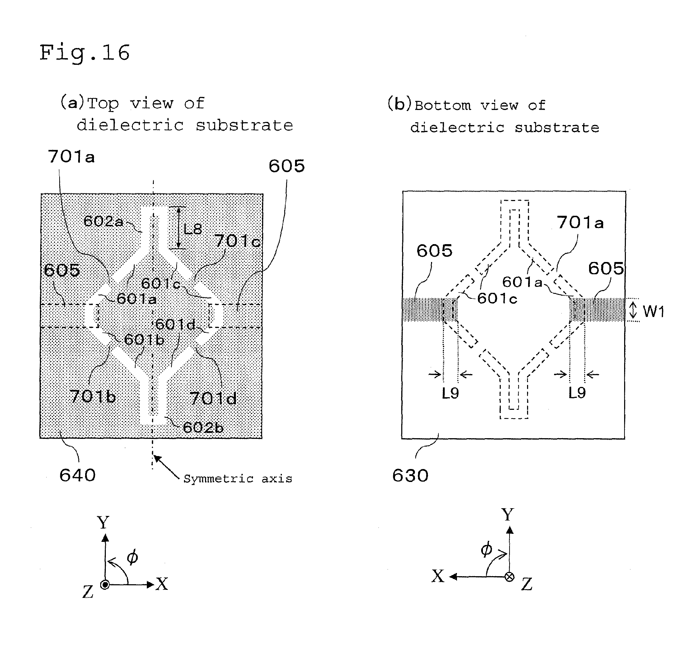

Figure 16(a) is a top view of a slot loop antenna with detour elements constituting the antenna device according to the fourth embodiment of the present invention, and Figure 16(b) is a bottom view of the slot loop antenna with detour elements constituting the antenna device according to the fourth embodiment of the present invention;

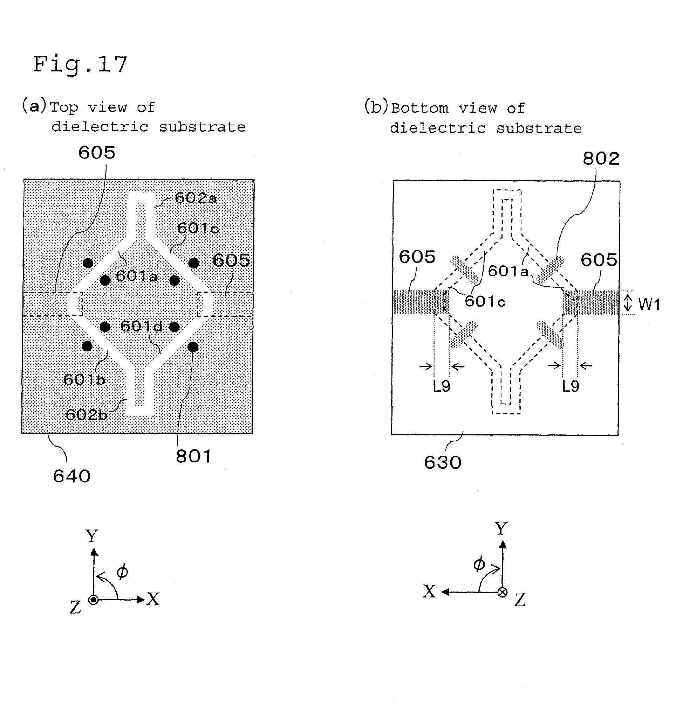

Figure 17(a) is a top view of the slot loop antenna with detour elements constituting the antenna device of another configuration according to the fourth embodiment of the present invention, and Figure 17(b) is a bottom view of the slot loop antenna with detour elements constituting the antenna device of another configuration according to the fourth embodiment of the present invention;

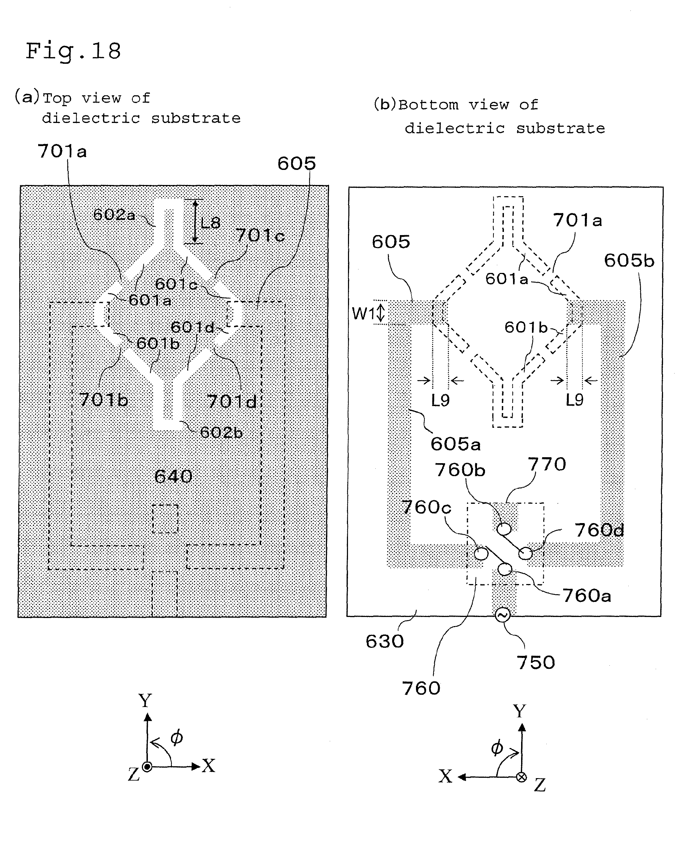

Figure 18(a) is a top view of the slot loop antenna with detour elements in the case of providing a feeding change-over switch on a dielectric substrate of the antenna device according to the fourth embodiment of the present invention, and Figure 18(b) is a bottom view of the slot loop antenna with detour elements in the case of providing the feeding change-over switch on the dielectric substrate of the antenna device according to the fourth embodiment of the present invention;

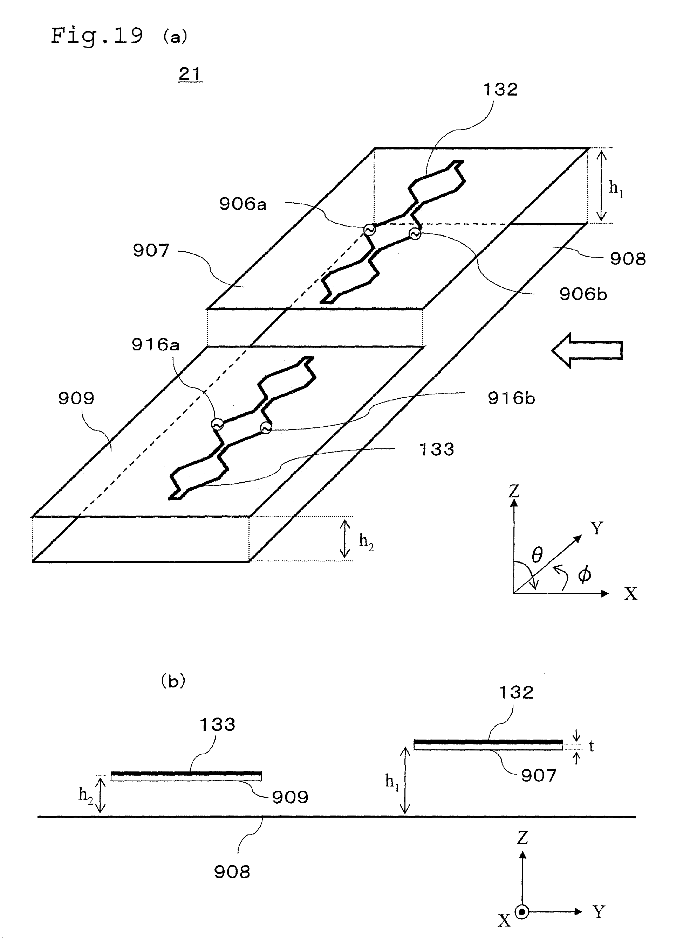

Figure 19(a) is a perspective view showing the configuration of the antenna device according to a fifth embodiment of the present invention, and Figure 19(b) is an arrow view showing the configuration of the antenna device according to the fifth embodiment of the present invention;

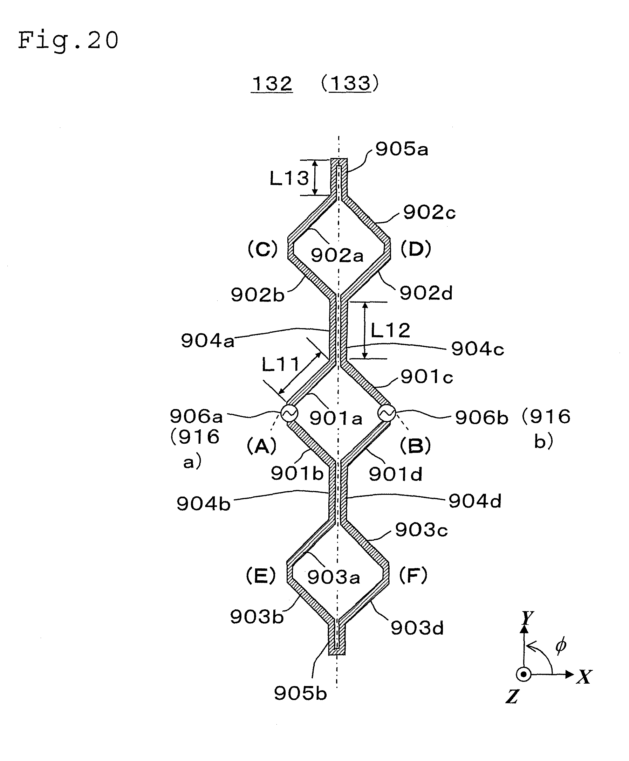

Figure 20 is a plan view of the linear loop antenna with detour elements of the antenna device according to the fifth embodiment of the present invention viewed from the + Z-axis direction;

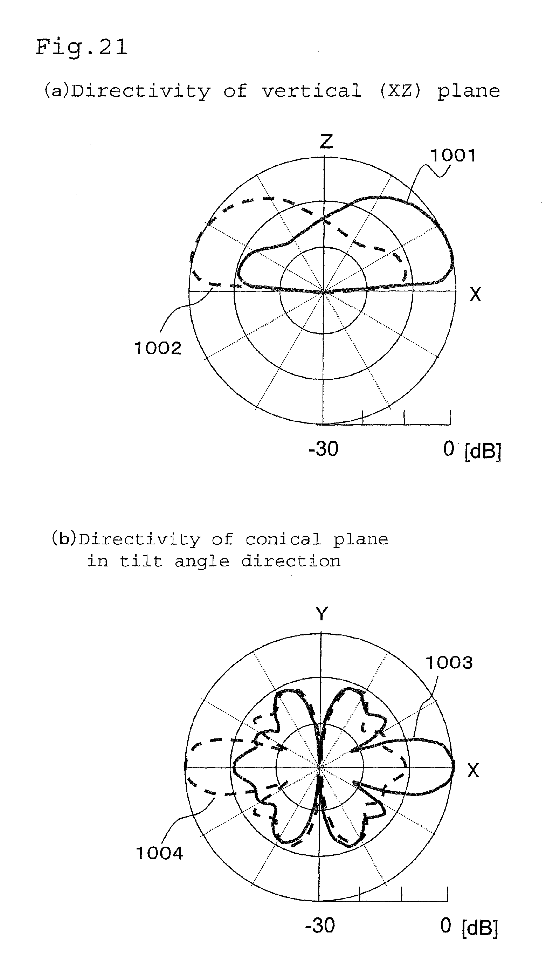

Figure 21(a) is a diagram showing the directivity of the vertical plane (XZ plane) of a linear loop antenna with detour elements 132 constituting the antenna device according to the fifth embodiment of the present invention, and Figure 21(b) is a diagram showing the directivity of the conical plane in the tilt angle direction of the linear loop antenna with detour elements 132 constituting the antenna device according to the fifth embodiment of the present invention;

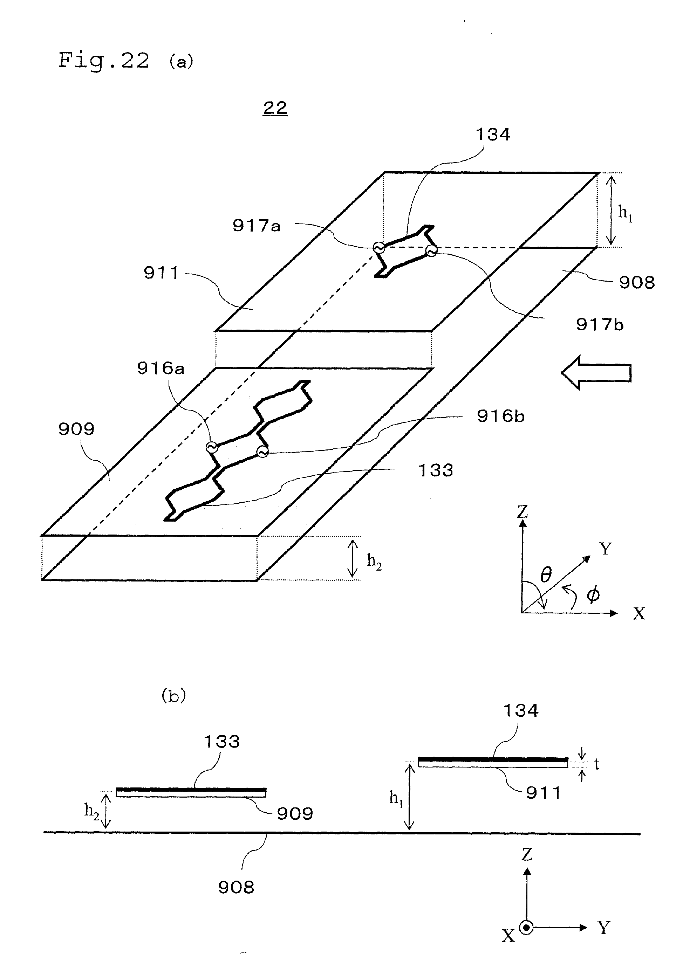

Figure 22(a) is a perspective view showing the configuration of the antenna device of another configuration according to the fifth embodiment of the present invention, and Figure 22(b) is an arrow view showing the configuration of the antenna device of another configuration according to the fifth embodiment of the present invention;

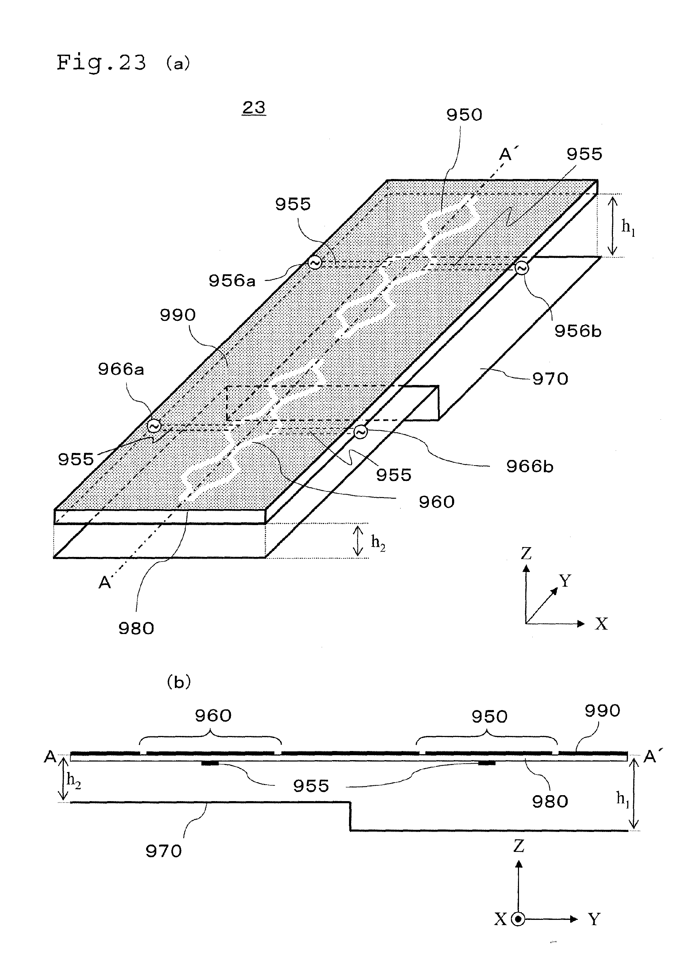

Figure 23(a) is a perspective view showing the configuration of the antenna device of a further configuration according to the fifth embodiment of the present invention, and Figure 23(b) is an A to A' sectional view showing the antenna device of a further configuration according to the fifth embodiment of the present invention;

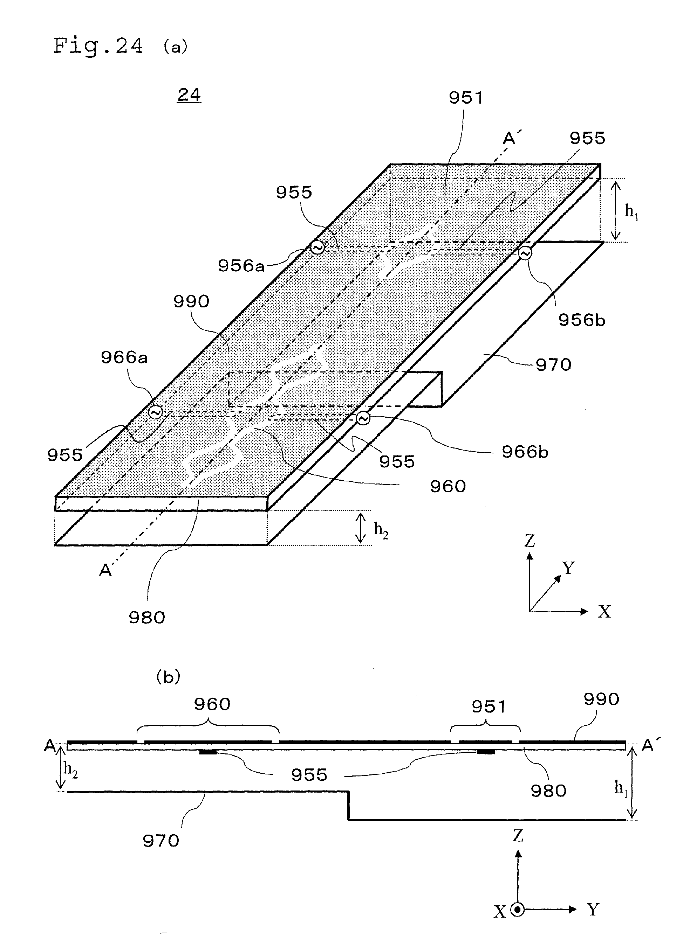

Figure 24(a) is a perspective view showing the configuration of the antenna device of a still further configuration according to the fifth embodiment of the present invention, and Figure 24(b) is an A to A' sectional view showing the antenna device of a still further configuration according to the fifth embodiment of the present invention;

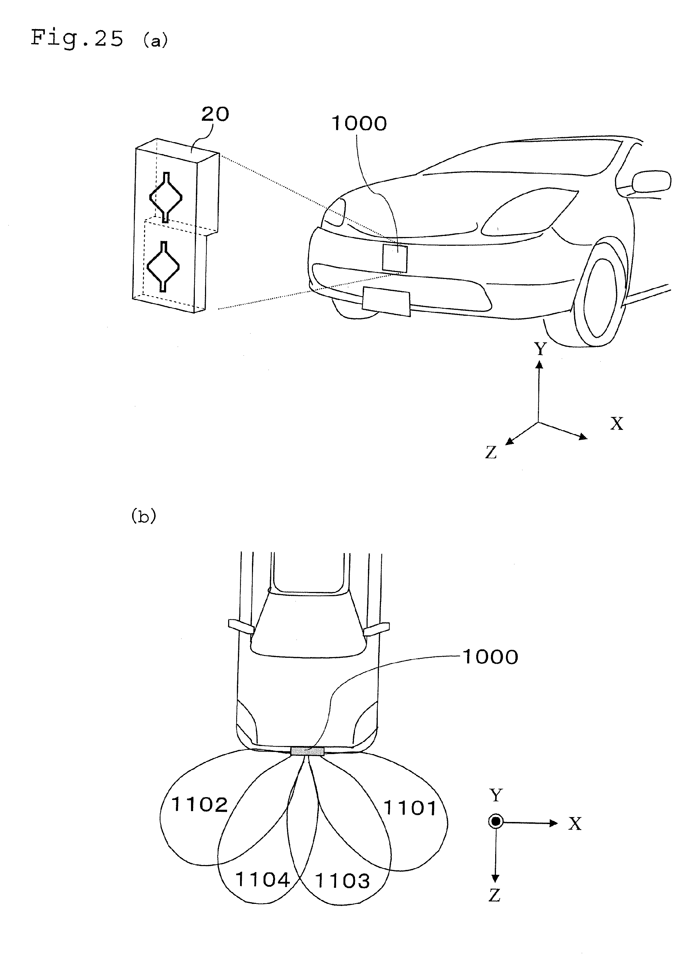

Figure 25(a) is a diagram showing a layout of the antenna device provided to a vehicle surrounding monitoring device according to a sixth embodiment of the present invention, Figure 25(b) is a diagram showing a monitoring area of the vehicle surrounding monitoring device according to the sixth embodiment of the present invention;

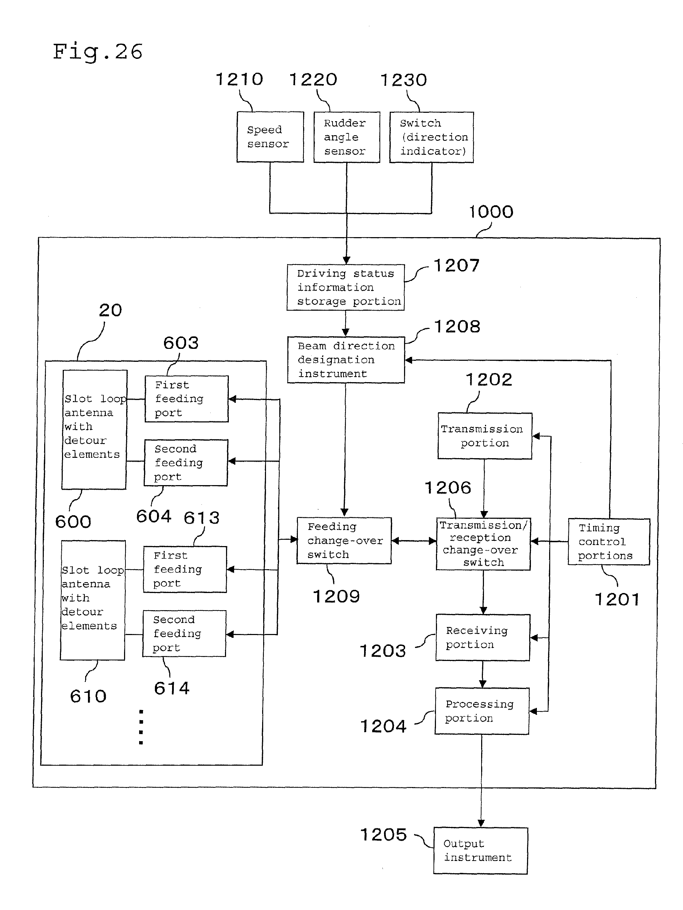

Figure 26 is a block diagram of the vehicle surrounding monitoring device according to the sixth embodiment of the present invention;

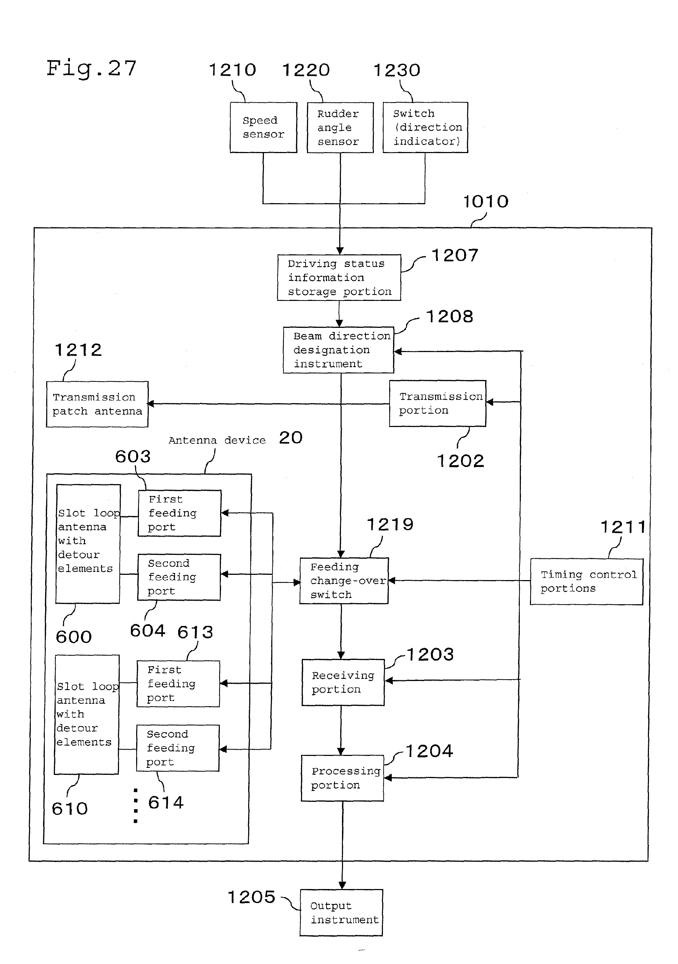

Figure 27 is a block diagram of the vehicle surrounding monitoring device of another configuration according to the sixth embodiment of the present invention;

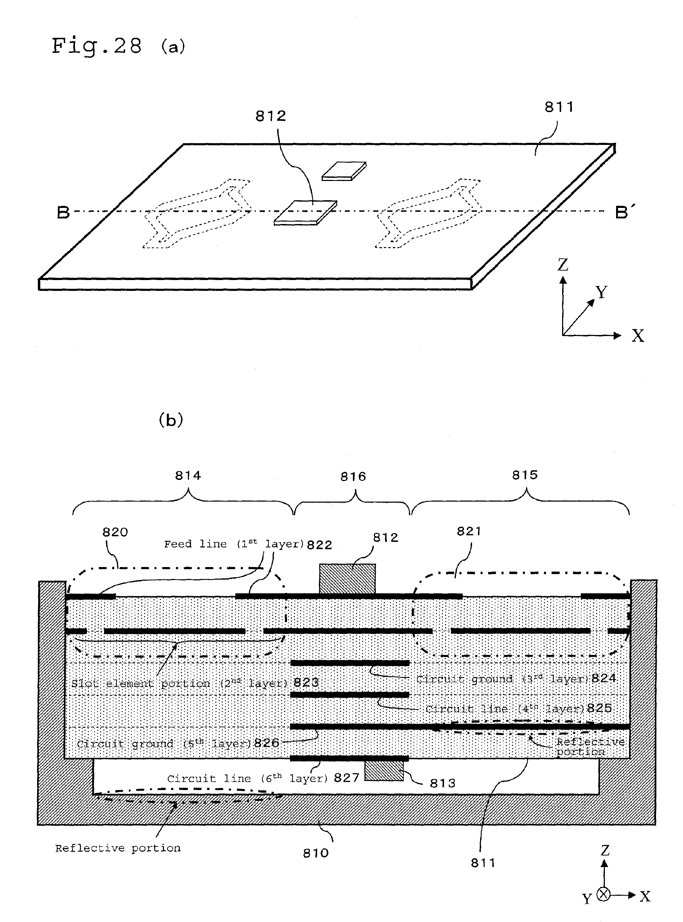

Figure 28(a) is a perspective view of a circuit board having each of components of the monitoring device mounted thereon according to a seventh embodiment of the present invention, and Figure 28(b) is an B to B' sectional view of the circuit board having each of the components of the monitoring device mounted thereon according to the seventh embodiment of the present invention;
Figure 29 is a block diagram of a conventional electronic beam scanning antenna device; and
Figure 30 is a diagram describing an "elevation angle" and a "horizontal direction" of the present invention.

### Description of Symbols

10, 11, 12, 13, 20, 21, 22, 23 and 24 Antenna devices
100, 110, 111, 112, 115, 116, 130, 131, 132, 133 and 134 Linear loop antenna with detour elements
101a to 101d, 106a, 106b, 901a to 901d, 902a to 902d and 903a to 903d Linear loop elements
102a, 102b, 105a, 105b, 107a, 107b, 905a and 905b Linear alternative elements
103, 113 and 117 Feeding ports
120, 121, 122, 123, 620, 908 and 970 Reflectors
140,142, 603, 613, 906a, 916a, 917a, 956a and 966a First feeding ports
141,143, 604, 614, 906b, 916b, 917b, 956b and 966b
Second feeding ports
   401, 411, 421, 422, 501, 512, 521, 522, 1001 and 1002 Directivity of an XZ plane 403, 413, 423, 424, 503, 514, 523, 524, 1003 and 1004 Directivity of a conical plane in a tilt angle direction
   600, 610, 950, 951 and 960 Slot loop antenna with detour elements
   601a to 601d Slot loop elements
   602a and 602b Slot alternative elements
   605, 605a, 605b and 955 Micro strip line (MSL)
   630, 907, 909, 911 and 980 Dielectric substrates 640 and 990 Ground planes
   701a to 701d Connection conductors
   750 Feeding terminal
   760 and 761 Switches
   760a to 760d Terminals
   770 GND
   801 Short pin
   802 Short line
   810 Housing
   811 Substrate
   812 and 813 ICs
   814 First antenna portion
   815 Second antenna portion
   816 Circuit portion
   820 First slot loop antenna with detour elements portion
   821 Second slot loop antenna with detour elements portion
   822 Feed line
   823 Slot element portion
   824 and 826 Circuit grounds
   825 and 827 Circuit lines
   904a to 904d Linear connection elements
   1000 and 1010 Vehicle surrounding monitoring device
   1101, 1102, 1103 and 1104 Monitoring areas
   1201 and 1211 Timing control portions
   1202 Transmission portion
   1203 Receiving portion
   1204 Processing portion
   1205 Output instrument
   1206 Transmission/reception change-over switch 1207 Driving status information storage portion 1208 Beam direction designation instrument
   1209 and 1219 Feeding change-over switches
   1210 Speed sensor
   1212 Transmission patch antenna
   1220 Rudder angle sensor
   1230 Switch (direction indicator)

### Best Mode for Carrying Out the Invention

Hereafter, embodiments of the present invention will be described by using the drawings.

### (First Embodiment)

Figures 1 and 2 are diagrams showing a configuration of an antenna device according to a first embodiment of the present invention. Hereafter, a description will be given as to the case where an antenna element is created on a dielectric substrate of εr = 2.26 for instance. The description will be given on condition that an operating frequency thereof is 26 GHz and 1 wavelength (1 equivalent wavelength) is 8.2 mm. For convenience of description, coordinate axes as shown in each of the drawings are defined.

Figure 1(a) is a perspective view showing the configuration of an antenna device 10 according to the first embodiment. Figure 1(b) is an arrow view showing the configuration of the antenna device 10 according to the first embodiment, which is viewed from the arrow direction of Figure 1(a), that is, the + X side.

As shown in Figures 1, the antenna device 10 according to the first embodiment includes two linear loop antenna with detour elements 100 and 110 and a reflector 120. The linear loop antenna with detour elements 100 and 110 are normally formed on a dielectric substrate or mounted on a housing or the like. However, the dielectric substrate and the like are omitted in the drawings here.

The linear loop antenna with detour elements 100 and 110 are examples of the multiple antenna elements of the present invention. And the portion of the reflector 120 opposed to the linear loop antenna with detour elements 100 and the portion of the reflector 120 opposed to the linear loop antenna with detour elements 110 are examples of multiple reflective portions of the present invention. The reflector 120 is an example of one reflector constituted by the multiple reflective portions of the present invention.

Figure 2 is a plan view of the linear loop antenna with detour elements 100 viewed from a + Z-axis direction of Figure 1. The linear loop antenna with detour elements 110 has the same configuration as the linear loop antenna with detour elements 100.

In Figure 1(a) and Figure 2, linear loop elements 101a to 101d are conductors of which element length L1 is approximately 1/3 wavelength (2.7 mm) and element width is 0.2 mm for instance. The linear loop elements 101a to 101d are laid out in a square shape as shown in Figure 2.

Linear alternative elements 102a and 102b are the conductors in a folded shape of which overall length is approximately 1/4 wavelength (2.1 mm), length L2 is approximately 1/8 wavelength (1.0 mm) and element width is 0.2 mm for instance. The linear alternative element 102a is connected between the linear loop element 101a and the linear loop element 101c, and the linear alternative element 102b is connected between the linear loop element 101b and the linear loop element 101d. Here, the linear alternative elements 102a and 102b are connected to project outside of the square shape in order to minimize deterioration of a radiation characteristic due to the connection between the linear alternative element 102a and the linear alternative element 102b, the connection between the linear alternative element 102a and the linear loop elements 101a and 101c, and the connection between the linear alternative element 102b and the linear loop elements 101b and 101d.

The linear loop elements 101a to 101d forming the square shape are examples of the loop elements of the present invention, and the linear alternative elements 102a and 102b are examples of a pair of the alternative elements of the present invention. The square shape formed by the linear loop elements 101a to 101d is an example of a rhombic shape of the present invention. The portion where the linear loop element 101a and the linear loop element 101c are close and the linear alternative element 102a is to be connected is an example of the part corresponding to an opposed peak of the rhombic shape on a symmetric axis of the present invention. The portion where the linear loop element 101b and the linear loop element 101d are close and the linear alternative element 102b is to be connected is also an example of the part corresponding to the opposed peak of the rhombic shape on the symmetric axis of the present invention. Both the portions of the linear alternative elements 102a and 102b that are connected to project outside of the square shape are examples of the projected portions of the present invention.

A feeding port 103 is provided between the linear loop element 101a and the linear loop element 101b so as to feed the linear loop antenna with detour elements 100. The linear loop element 101c and the linear loop element 101d are connected.

Therefore, as to the linear loop antenna with detour elements 100 according to the first embodiment constituted by the linear loop elements and the linear alternative elements, it has a line connecting opposite angles of the square shape as the symmetric axis on which the linear alternative elements 102a and 102b are placed, and is in a symmetrical shape to the symmetric axis as shown in Figure 2.

As shown in Figure 1(a), the multiple linear loop antenna with detour elements 100 and 110 thus configured are laid out so that their symmetric axes are in the same direction. Here, the feeding ports 103 and 113 of the linear loop antenna with detour elements 100 and 110 are laid out so as to be on the same side against the symmetric axes respectively.

The feeding ports 103 and 113 are examples of feeding portions of the present invention respectively.

The reflector 120 is a conductor plate. As shown in Figure 1(b), the linear loop antenna with detour elements 100 is placed in parallel with the reflector 120 so that an XY plane thereof is in a position away from the reflector 120 to the + Z side by a distance h₁ equivalent to approximately 0.42 free space wavelength (5.0 mm). The linear loop antenna with detour elements 110 is placed in parallel with the reflector 120 so that the XY plane thereof is in a position away from the reflector 120 to the + Z side by a distance h₂ equivalent to approximately 0.13 free space wavelength (1.5 mm).

Next, operation of the antenna device 10 having the above-mentioned configuration will be described by using Figures 1 to 6.

Figures 3 are diagrams showing current distribution on the linear loop elements 101a to 101d of the linear loop antenna with detour elements 100 constituting the antenna device 10 according to the first embodiment of the present invention. Figure 3(a) shows a current amplitude characteristic, and Figure 3(b) shows a current phase characteristic respectively. Reference characters (A) to (D) shown on the horizontal axes of Figures 3 are corresponding to reference characters (A) to (D) shown in Figure 2.

In Figure 3(a), a current amplitude characteristic 201a indicates the current amplitude characteristic of the linear loop element 101a and the linear loop element 101b, and it is verifiable that the current amplitude takes a peak value at the connection between the linear loop element 101a and the linear loop element 101b. Similarly, a current amplitude characteristic 201b indicates the current amplitude characteristic of the linear loop element 101c and the linear loop element 101d, and it is verifiable that the current amplitude takes the peak value at the connection between the linear loop element 101c and the linear loop element 101d.

In Figure 3(b), a current phase characteristic 202a indicates the current phase characteristic of Y-direction components of the linear loop element 101a and the linear loop element 101b, and a current phase characteristic 202b indicates the current phase characteristic of the Y-direction components of the linear loop element 101c and the linear loop element 101d.

It is verifiable, from Figures 3(a) and 3(b), that a current phase difference of the Y-direction components between the peak points of the current amplitude is approximately 150 degrees. The current phase difference is approximately 11/12 wavelength (330 degrees) since the distance between the peak points is the length having added the linear loop element 101a, the linear alternative element 102a and the linear loop element 101c (or the length having added the linear loop element 101b, the linear alternative element 102b and the linear loop element 101d). The current phase difference is generated because a current phase of the Y-direction components inverts by 180 degrees between the peak points.

In the case of regarding the linear loop elements 101a and 101b as a pair of the antenna elements, it is thinkable that the operation becomes similar to a half-wavelength dipole of Y-direction polarization since a current peak point exists at the center of the element. Similarly, in the case of regarding the linear loop elements 101c and 101d as a pair of the antenna elements, it is thinkable that the operation becomes similar to the half-wavelength dipole of Y-direction polarization. In Figure 3(b), the phase difference of the antenna elements is 150 degrees. Therefore, it can be considered that the antenna device 10 shown in Figures 1 is almost the same as that in the case of feeding a half-wavelength dipole array with two elements arranged in an X direction by providing the phase difference of 150 degrees.

Next, the operation of the antenna device 10 will be described by noting a vertical (XZ) plane. When noting the vertical (XZ) plane, directivity of the half-wavelength dipole of Y-direction polarization is isotropic so that it can be modeled by a point wave source.

Figure 4 is a schematic diagram showing a point wave source model of the operation of the linear loop antenna with detour elements 100 constituting the antenna device 10 according to the first embodiment.

To be more precise, Figure 4 is a diagram wherein the half-wavelength dipole array with two elements is modeled as a point wave source with two elements by noting the vertical (XZ) plane. A point wave source 301a has modeled the linear loop element 101a and the linear loop element 101b, and a point wave source 301b has modeled the linear loop element 101c and the linear loop element 101d. Here, an excitation phase of the point wave source 301a advances by 150 degrees further than the excitation phase of the point wave source 301b from Figure 3(b).

If the effect of the reflector 120 is modeled by using a mapping principle, image wave sources 302a and 302b can be assumed in the positions away from the point wave sources 301a and 301b to - Z side by 2h₁ (approximately 0.84 free space wavelength (10 mm)) respectively. In this case, the excitation phases of the image wave sources 302a and 302b invert against the excitation phases of the point wave sources 301a and 301b by 180 degrees respectively.

The positions of the point wave sources 301a and 301b in the X direction are the peak points of the current amplitude on the linear loop elements. Therefore, an interval L3 between the point wave sources 301a and 301b is approximately 1/2 wavelength (4.1 mm).

Due to radiation by the four-element array of the point wave sources 301a and 301b and the image wave sources 302a and 302b configured as above, main beams 303a and 303b are formed in a direction tilted just by a tilt angle α (55 degrees) from ± Z directions. In reality, however, the reflector 120 exists so that there is only the direction of the main beam 303a.

Therefore, the linear loop antenna with detour elements 110 is placed so that the XY plane thereof is in a position where a distance h₂ from the reflector 120 is shorter than the above and is away from the reflector 120 to the + Z side by approximately 0.13 free space wavelength (1.5 mm), and thus the positions of the image wave sources 302a and 302b in Figure 4 change. Thus, the radiation of the linear loop antenna with detour elements 110 is formed in a direction tilted just by a tilt angle α (25 degrees) which is shallower than the linear loop antenna with detour elements 100 from the ± Z directions.

Figures 5 are diagrams showing the directivity of the linear loop antenna with detour elements 100 of the antenna device 10 according to the first embodiment. Figure 5(a) indicates the directivity of the vertical (XZ) plane, and Figure 5(b) indicates the directivity of the conical plane when the elevation angle θ is 55 degrees.

In Figure 5(a), a directivity 401 indicates the directivity of an E φ component in the case of exciting the linear loop antenna with detour elements 100 from the feeding port 103, where it is verifiable that the main beam tilted in the direction in which the elevation angle θ is 55 degrees on a + X side can be obtained.

In Figure 5(b), a directivity 403 indicates the directivity of the E φ component in the case of exciting the linear loop antenna with detour elements 100 from the feeding port 103 as with the directivity 401 of Figure 5(a), where it is verifiable that the main beam is facing the + X direction. In this case, a directivity gain of the main beam is 10.5 dBi, a half-value angle of the conical plane is 57 degrees, and an F/B ratio (ratio between the main beam and a back lobe) is 7 dB.

Figures 6 are diagrams showing the directivity of the linear loop antenna with detour elements 110 of the antenna device 10 according to the first embodiment. Figure 6(a) indicates the directivity of the vertical plane (XZ plane), and Figure 6(b) indicates the directivity of the conical plane when the elevation angle θ is 25 degrees.

In Figure 6(a), a directivity 501 indicates the directivity of an E φ component in the case of exciting the linear loop antenna with detour elements 110 from the feeding port 113, where it is verifiable that the main beam tilted in the direction in which the elevation angle θ is 25 degrees on the + X side can be obtained.

In Figure 6(b), a directivity 503 indicates the directivity of the E φ component in the case of exciting the linear loop antenna with detour elements 110 from the feeding port 113 as with the directivity 501 of Figure 6(a), where it is verifiable that the main beam is facing the + X direction.

The linear loop antenna with detour elements 100 is placed so that the XY plane thereof is in a position where it is away from the reflector 120 to the + Z side by a distance h₁ equivalent to approximately 0.42 free space wavelength (5.0 mm). In comparison, the linear loop antenna with detour elements 110 is placed so that the XY plane thereof is in a position where it is away from the reflector 120 to the + Z side by a distance h₂ equivalent to approximately 0.13 free space wavelength (1.5 mm). Therefore, the positions of the image wave sources 302a and 302b in Figure 4 change due to the difference in the distance from the reflector 120. Thus, the radiation of the linear loop antenna with detour elements 110 is formed in the direction of the directivity of the vertical plane (XZ plane) tilted just by the tilt angle α (25 degrees) which is shallower than the linear loop antenna with detour elements 100 from the ± Z directions.

Thus, according to the first embodiment, the linear loop antenna with detour elements 100 and 110 are provided with the linear alternative elements 102a and 102b in the folded shape on the symmetric axis which connects the linear loop elements 101a to 101d formed in the square shape with a set of vertexes opposed to the square shape, has the reflector 120 placed at a predetermined distance from the square shape, and has the feeding ports 103 and 113 on another vertex so as to excite and operate it from the feeding ports 103 and 113. A plurality (N pieces) of the linear loop antenna with detour elements 100 and 110 are placed so that all the symmetric axes of the linear loop antenna with detour elements 100 and 110 face the same direction while the distance from the reflector 120 is different as to each of the linear loop antenna with detour elements. Thus, the operation of feeding is switched by selecting at least one out of the feeding ports (N pieces) of the linear loop antenna with detour elements so as to allow the main beams to be formed in N different elevation angle directions on the + X side of the XZ plane.

To be more specific, because of the configuration of the antenna device 10 according to the first embodiment, a current phase lag occurs between the linear loop element 101a/the linear loop element 101b and the linear loop element 101c/the linear loop element 101d due to the linear alternative element 102a and the linear alternative element 102b in each of the linear loop antenna with detour elements 100 and 110. It is possible to form the main beams tilted from plane vertical directions of the linear loop antenna with detour elements 100 and 110 by combining the radio wave radiated by each of the linear loop antenna with detour elements 100 and 110 to which the current phase lag occurs with the radio wave reflected by the reflector 120. Furthermore, the linear loop antenna with detour elements 100 and 110 have different tilt angles because of different distances from the reflector 120. Therefore, it is possible, by selectively feeding the feeding ports 103 and 113 of the multiple linear loop antenna with detour elements 100 and 110, to realize an antenna device of a simple and low-cost configuration which forms the main beam in a desired direction.

It is possible to form the main beams in multiple different elevation angle directions on the - X side on the XZ plane by using the antenna device (the antenna device having the linear loop antenna with detour elements which have the feeding ports placed on the linear loop elements on the + X side of the symmetric axis) wherein the positions of the feeding ports of the linear loop antenna with detour elements are placed on the opposite side of the symmetric axis to the antenna device 10 shown in Figures 1. Therefore, it is possible to form the main beams in multiple elevation angle directions over a large area in the ± X directions on the XZ plane by providing the antenna device of such a configuration in conjunction with the antenna device 10 shown in Figures 1.

The antenna device 10 of the first embodiment uses the common and planate reflector 120 as the reflector having the respective reflective portions opposed to the multiple linear loop antenna with detour elements 100 and 110. Therefore, it is possible to realize an antenna device of a low-cost and simple configuration which has the main beams in multiple elevation angle directions.

Figures 7 show plan views of the linear loop antenna with detour elements of another configuration according to the first embodiment viewed from the + Z side direction.

According to the antenna device 10 of the first embodiment described above, the linear loop antenna with detour elements 100 and 110 are shaped so that the linear alternative elements 102a and 102b are connected to project outside of the square shape formed by the linear loop elements 101a to 101d as shown in Figure 2. However, the linear alternative elements may also be connected to face the inside of the square shape.

Figure 7(a) shows a plan view of the linear loop antenna with detour elements in the shape in which the linear alternative elements are connected to face the inside of the square shape. The same component parts as those in Figure 2 are given the same symbols.

In Figure 7(a), the linear loop elements 101a to 101d are the conductors of which element length L1 is approximately 1/3 wavelength (2.7 mm) and element width is 0.2 mm for instance, and are laid out in a square shape as with the linear loop antenna with detour elements 100 shown in Figure 2.

Linear alternative elements 105a and 105b are the conductors in a folded shape of which overall length is approximately 1/4 wavelength (2.1 mm), length L4 is approximately 1/8 wavelength (1.0 mm) and element width is 0.2 mm for instance. The linear alternative element 105a is connected between the linear loop element 101a and the linear loop element 101c, and the linear alternative element 105b is connected between the linear loop element 101b and the linear loop element 101d.

The linear alternative elements 105a and 105b are in the same shape as the linear alternative elements 102a and 102b of the linear loop antenna with detour elements 100 shown in Figure 2. However, the linear alternative elements 105a and 105b are different from the shape in Figure 2 in that they are connected to face the inside of the square shape. The portions of the linear alternative elements 105a and 105b connected to face the inside of the square shape are examples of the projected portions provided facing the inside of the rhombic shape of the present invention.

It is possible, as with the antenna device 10, to form the main beams in multiple different elevation angle directions on the + X side on the XZ plane by using the antenna device having a plurality of the linear loop antenna with detour elements shown in Figure 7(a) laid out to mutually have different distances from the reflector.

The linear loop antenna with detour elements shown in Figure 7(a) has a lower gain than the case of the configuration of Figure 2 due to the connection between the linear alternative element and the linear loop element and the mutual connection between the linear alternative elements. However, the linear loop antenna with detour elements can reduce the size of the antenna device in the Y direction. Therefore, it is desirable to decide whether to connect the linear alternative elements in the orientation as in Figure 2 or as in Figure 7(a) according to an application.

According to the embodiment, the antenna device 10 has the square shape formed by the linear loop elements 101a to 101d of each of the linear loop antenna with detour elements 100 and 110. However, the linear loop elements 101a to 101d may also form the rhombic shape. Furthermore, the same effect can be obtained by setting the lengths of the linear loop elements and the linear alternative elements to appropriate lengths according to the operating frequency in the case of the symmetrical shape having the linear alternative elements laid out on the symmetric axis.

Figure 7(b) shows a plan view of the linear loop antenna with detour elements in which the linear loop elements form a shape other than square. Here, as an example thereof, a configuration in which the linear loop elements form a circular shape is shown. The same component parts as those in Figure 2 are given the same symbols.

In Figure 7(b), linear loop elements 106a and 106b are the conductors in a semi-circular shape of which element length L5 is approximately 2/3 wavelength (5.5 mm) and element width is 0.2 mm for instance. The linear loop elements 106a and 106b are laid out in a circular shape as shown in Figure 7(b).

Linear alternative elements 107a and 107b are the conductors in the folded shape of which overall length is approximately 1/4 wavelength (2.1 mm), length L6 is approximately 1/8 wavelength (1.0 mm) and element width is 0.2 mm for instance. The linear alternative element 107a is connected between one ends of the linear loop element 106a and the linear loop element 106b, and the linear alternative element 107b is connected between the other ends of the linear loop element 106a and the linear loop element 106b. Here, the linear alternative elements 107a and 107b are connected to project outside of the circular shape in order to minimize deterioration of the radiation characteristic due to the connection between the linear alternative element 107a and the linear alternative element 107b, the connection between the linear alternative element 107a and the linear loop elements 106a and 106b, and the connection between the linear alternative element 107b and the linear loop elements 106a and 106b.

The feeding port 103 is provided at the center of the linear loop element 106a so as to feed the linear loop antenna with detour elements.

In the case of the antenna device having a plurality of the linear loop antenna with detour elements in the shape as shown in Figure 7(b) laid out to mutually have different distances from the reflector, it is possible, as with the antenna device 10, to form the main beams in multiple different elevation angle directions on the + X side on the XZ plane by setting the lengths of the linear loop elements and the linear alternative elements to appropriate lengths according to the operating frequency.

In Figure 7(b), the two linear loop elements form the circular shape. However, they may also form a symmetric elliptical shape to the symmetric axis.

The shape formed by the multiple linear loop elements is not limited to the rhombic shape and elliptical shape. The same effect can be obtained by any shape forming a symmetrical shape to the symmetric axis.

It is also possible to have a configuration in which a plurality of the linear loop antenna with detour elements in different shapes are provided on the same antenna device. For instance, the linear loop antenna with detour elements shown in Figure 2, Figures 7(a) and 7(b) can be mixedly provided on the same antenna device. In this case, the same effect can be obtained by placing the linear loop antenna with detour elements so that the symmetric axes of the linear loop antenna with detour elements are mutually in the same direction and differentiating the distance from the reflector as to each of the linear loop antenna with detour elements to render the elevation angle of each beam different.

Impedance can be adjusted by displacing the position of the feeding port placed on the linear loop element. It has been described that the feeding port 103 is placed on the vertex of the square shape formed by the linear loop elements in Figure 2 and Figure 7(a) and at the center of the linear loop element 106a in the semicircular shape in Figure 7(b) respectively. However, the position for placing the feeding port 103 can be displaced in order to adjust the impedance according to a surrounding circuit configuration. In the case of Figure 2 for instance, the feeding port 103 may be placed on the linear loop element 101a or the linear loop element 101b.

The first embodiment uses the common and planate reflector as the reflector having the reflective portions opposed to the multiple linear loop antenna with detour elements. It is also possible to place the multiple linear loop antenna with detour elements on the same plane and place multiple reflectors including their respective reflective portions on a different stage so as to mutually differentiate the respective distances between the linear loop antenna with detour elements and the reflectors. It is also possible to use one reflector with a different stage including multiple reflective portions (a reflector like a reflector 620 shown in Figure 15). In these cases, the multiple linear loop antenna with detour elements can be formed on a common dielectric substrate for instance. Therefore, it is also possible, in this case, to realize an antenna device of a low-cost and simple configuration which has the main beams in multiple elevation angle directions.

### (Second Embodiment)

Figures 8 are diagrams showing the configuration of the antenna device according to a second embodiment of the present invention.

Figure 8(a) is a perspective view showing the configuration of an antenna device 11 according to the second embodiment. Figure 8(b) is an arrow view showing the configuration of the antenna device 11 according to the second embodiment, which is viewed from the arrow direction of Figure 8(a), that is, the - Y side. The same component parts as those in Figure 1 are given the same symbols.

As shown in Figures 8, the antenna device 11 of the second embodiment includes two linear loop antenna with detour elements 111 and 112 and a reflector 121.

The reflector 121 is a conductor plate. As shown in Figure 8(b), the linear loop antenna with detour elements 111 is placed in parallel with the reflector 121 so that the XY plane thereof is in a position away from the reflector 121 to the + Z side by a distance h₁ equivalent to approximately 0.42 free space wavelength (5.0 mm). The linear loop antenna with detour elements 112 is placed in parallel with the reflector 121 so that the XY plane thereof is in a position away from the reflector 121 to the + Z side by a distance h₂ equivalent to approximately 0.13 free space wavelength (1.5 mm).

Both the linear loop antenna with detour elements 111 and 112 have the same configuration as the linear loop antenna with detour elements 100 of the first embodiment shown in Figure 2. The antenna device 11 of the second embodiment is different from the antenna device 10 of the first embodiment shown in Figures 1 in the layout of the two linear loop antenna with detour elements.

The antenna device 10 of the first embodiment shown in Figures 1 has the two linear loop antenna with detour elements 100 and 110 placed in the positions in line in the Y-axis direction. To be more specific, the linear loop antenna with detour elements 100 and 110 are placed so that their respective symmetric axes are on the same YZ plane on the coordinate axes of Figures 1.

In comparison, as shown in Figure 8(a), the antenna device 11 of the second embodiment has the two linear loop antenna with detour elements 111 and 112 placed in the positions in line in the X-axis direction.

However, the antenna device 11 of the second embodiment is the same as the antenna device 10 of the first embodiment in that the linear loop antenna with detour elements 111 and 112 are placed with their respective symmetric axes in parallel and in the same direction at different distances from the reflector 121.

Even with such a configuration, it is possible, as with the first embodiment, to switch the operation of feeding by selecting at least one out of the feeding ports 103 and 113 of the linear loop antenna with detour elements 111 and 112 so as to allow the main beams to be formed in multiple different elevation angle directions on the + X side of the XZ plane.

The antenna device 11 of the second embodiment uses the common and planate reflector 121 as the reflector having the respective reflective portions opposed to the multiple linear loop antenna with detour elements. Therefore, it is possible to realize an antenna device of a low-cost and simple configuration which has the main beams in multiple elevation angle directions.

As the same effect as the antenna device of the first embodiment can be obtained, it is desirable to decide whether to have the configuration in Figures 1 or the configuration in Figures 8 according to the configuration of the device in which the antenna device is to be incorporated, an installation location of the antenna device and the like.

It is also possible to have a configuration combining Figures 1 with Figures 8, that is, the configuration in which the multiple linear loop antenna with detour elements are two-dimensionally placed. In that case, the same effect can be obtained by placing the multiple linear loop antenna with detour elements so that the symmetric axes of the linear loop antenna with detour elements are parallel and the distances from the reflector are mutually different.

The same effect can also be obtained just by placing the multiple linear loop antenna with detour elements so that the symmetric axes of the linear loop antenna with detour elements are parallel and the distances from the reflector are mutually different even without placing the multiple linear loop antenna with detour elements to align in the X-axis direction or in the Y-axis direction.

Figures 9 show the antenna device of another configuration according to the second embodiment of the present invention.

Figure 9(a) is a perspective view showing the configuration of an antenna device 12 of another configuration according to the second embodiment. Figure 9(b) is an arrow view showing the configuration of the antenna device 12 of the second embodiment, which is viewed from the arrow direction of Figure 9(a), that is, the + X side. The same component parts as those in Figure 1 are given the same symbols.

As shown in Figures 9, the antenna device 12 of the second embodiment includes two linear loop antenna with detour elements 115 and 116 and a reflector 122.

The reflector 122 is a conductor plate. As shown in Figure 9(b), the linear loop antenna with detour elements 115 is placed in parallel with the reflector 122 so that the XY plane thereof is in a position away from the reflector 122 to the + Z side by a distance h₁ equivalent to approximately 0.42 free space wavelength (5.0 mm). The linear loop antenna with detour elements 116 is placed in parallel with the reflector 122 so that the XY plane thereof is in a position away from the reflector 122 to the + Z side by a distance h₂ equivalent to approximately 0.13 free space wavelength (1.5 mm).

The linear loop antenna with detour elements 115 has the same configuration as the linear loop antenna with detour elements 100 of the first embodiment shown in Figure 2. However, the configuration of the linear loop antenna with detour elements 116 is different from the first embodiment.

A feeding port 117 of the linear loop antenna with detour elements 116 is placed on the opposite side to the symmetric axis from the feeding port 103 of the linear loop antenna with detour elements 115. In the case of Figure 9(a), the feeding port 103 of the linear loop antenna with detour elements 115 is placed on the - X side to the symmetric axis in the Y-axis direction while the feeding port 117 of the linear loop antenna with detour elements 116 is placed on the + X side to the symmetric axis in the Y-axis direction.

Figures 10 are diagrams showing the directivity of the linear loop antenna with detour elements 115 and 116 of the antenna device 12 according to the second embodiment. Figure 10(a) shows the directivity of the vertical (XZ) plane, and Figure 10(b) shows the directivity of each conical plane when the elevation angle θ in the + X side direction is 55 degrees and the elevation angle θ in the - X side direction is 25 degrees.

In Figure 10(a), a directivity 411 indicated in full line shows the directivity of the E φ component in the case of exciting the linear loop antenna with detour elements 115 from the feeding port 103 of the linear loop antenna with detour elements 115, where it is verifiable that the main beam tilted in the direction in which the elevation angle θ is 55 degrees on the + X side can be obtained. A directivity 512 indicated in dotted line shows the directivity of the E φ component in the case of exciting the linear loop antenna with detour elements 116 from the feeding port 117 of the linear loop antenna with detour elements 116, where it is verifiable that the main beam tilted in the direction in which the elevation angle θ is 25 degrees on the - X side can be obtained.

In Figure 10(b), as with the directivity 411 of Figure 10(a), a directivity 413 indicated in full line shows the directivity of the E φ component in the case of exciting the linear loop antenna with detour elements 115 from the feeding port 103, where it is verifiable that the main beam faces the + X side direction. As with the directivity 512 of Figure 10(a), a directivity 514 indicated in dotted line shows the directivity of the E φ component in the case of exciting the linear loop antenna with detour elements 116 from the feeding port 117, where it is verifiable that the main beam faces the - X side direction.

The antenna device 12 of the second embodiment can form the main beams in the two directions of the elevation angle direction on the + X side and the elevation angle direction on the - X side on the XZ plane by switching feeding operation to the feeding port 103 and the feeding port 117.

The antenna device 12 shown in Figures 9 includes one each of the linear loop antenna with detour elements 115 for forming the main beam in the elevation angle direction on the + X side and the linear loop antenna with detour elements 116 for forming the main beam in the elevation angle direction on the - X side. It is also possible to include multiple pieces of each of the linear loop antenna with detour elements for forming the main beams in the elevation angle directions on the + X side and - X side. In that case, the elevation angle direction of the main beam of each linear loop antenna with detour elements becomes different by placing the linear loop antenna with detour elements and the reflector so as to mutually differentiate the respective distances between the linear loop antenna with detour elements and the reflector. Therefore, it is possible to realize an antenna device which forms the main beams in a broad elevation angle range by combining the main beams.

### (Third Embodiment)

Figures 11 and 12 are diagrams showing the configuration of the antenna device according to a third embodiment of the present invention.

Figure 11(a) is a perspective view showing the configuration of the antenna device 13 according to the third embodiment. Figure 11(b) is an arrow view showing the configuration of the antenna device 13 according to the third embodiment, which is viewed from the arrow direction of Figure 11(a), that is, the + X side.

As shown in Figures 11, the antenna device 13 according to the third embodiment includes two linear loop antenna with detour elements 130 and 131 and a reflector 123.

Figure 12 is a plan view of the linear loop antenna with detour elements 130 viewed from the + Z-axis direction of Figures 11. The linear loop antenna with detour elements 131 has the same configuration as the linear loop antenna with detour elements 130.

The antenna device 10 of the first embodiment shown in Figures 1 has the configuration in which each of the linear loop antenna with detour elements includes one feeding port. The antenna device 13 according to the third embodiment is different from the first embodiment in that each of the linear loop antenna with detour elements includes two feeding ports.

In Figures 11 and 12, the linear loop elements 101a to 101d are conductors of which element length L1 is approximately 1/3 wavelength (2.7 mm) and element width is 0.2 mm for instance. The linear loop elements 101a to 101d are laid out in a square shape as shown in Figure 12.

Linear alternative elements 102a and 102b are the conductors in a folded shape of which overall length is approximately 1/4 wavelength (2.1 mm), length L2 is approximately 1/8 wavelength (1.0 mm) and element width is 0.2 mm for instance. The linear alternative element 102a is connected between the linear loop element 101a and the linear loop element 101c, and the linear alternative element 102b is connected between the linear loop element 101b and the linear loop element 101d. Here, the linear alternative elements 102a and 102b are connected to project outside of the square shape in order to minimize deterioration of the radiation characteristic due to the connection between the linear alternative element 102a and the linear alternative element 102b, the connection between the linear alternative element 102a and the linear loop elements 101a and 101c, and the connection between the linear alternative element 102b and the linear loop elements 101b and 101d.

The linear loop antenna with detour elements 130 has a first feeding port 140 provided between the linear loop element 101a and the linear loop element 101b, and also has a second feeding port 141 provided between the linear loop element 101c and the linear loop element 101d. The first feeding port 140 and second feeding port 141 feed the linear loop antenna with detour elements 130 respectively.

Therefore, as shown in Figure 12, the linear loop antenna with detour elements 130 of the third embodiment composed of the linear loop elements and the linear alternative elements has a line connecting opposite angles of the square shape as its symmetric axis on which the linear alternative elements 102a and 102b are placed. The linear loop antenna with detour elements 130 is in the symmetrical shape to the symmetric axis.

As shown in Figure 11(a), the multiple linear loop antenna with detour elements 130 and 131 thus configured are laid out so that their symmetric axes are in the same orientation.

The reflector 123 is a conductor plate. As shown in Figure 11(b), the linear loop antenna with detour elements 130 is placed in parallel with the reflector 123 so that the XY plane thereof is in a position away from the reflector 123 to the + Z side by a distance h₁ equivalent to approximately 0.42 free space wavelength (5.0 mm). The linear loop antenna with detour elements 131 is placed in parallel with the reflector 123 so that the XY plane thereof is in a position away from the reflector 123 to the + Z side by a distance h₂ equivalent to approximately 0.13 free space wavelength (1.5 mm).

Next, the operation of the antenna device 13 having the above-mentioned configuration will be described

The configuration of the antenna device 13 of the third embodiment is different from the antenna device 10 of the first embodiment shown in Figures 1 only in the number of the feeding ports provided to the linear loop antenna with detour elements while the shape of each linear loop antenna with detour elements is the same. Therefore, current distribution of the antenna device 13 of the third embodiment is the same as that of the first embodiment shown in Figures 3.

Therefore, the operation of the antenna device 13 of the third embodiment can be represented by the point wave source model of which schematic diagram is shown in Figure 4.

In the point wave source model shown in Figure 4, as to the linear loop antenna with detour elements 130, the main beams 303a and 303b are formed in a direction tilted just by a tilt angle α (55 degrees) from the ± Z directions due to radiation by the four-element array of the point wave sources 301a and 301b and the image wave sources 302a and 302b. In reality, however, the reflector 123 exists so that there is only the direction of the main beam 303a.

Therefore, the linear loop antenna with detour elements 131 is placed so that the XY plane thereof is in a position where a distance h₂ from the reflector 123 is shorter than h₁ to be away from the reflector 123 to the + Z side by approximately 0.13 free space wavelength (1.5 mm), and thus the positions of the image wave sources 302a and 302b in Figure 4 change. Thus, the radiation of the linear loop antenna with detour elements 131 is formed in a direction tilted just by a tilt angle α (25 degrees) which is shallower than the linear loop antenna with detour elements 130 from the ± Z directions.

Figures 13 are diagrams showing the directivity of the linear loop antenna with detour elements 130 of the antenna device 13 according to the third embodiment. Figure 13(a) indicates the directivity of the vertical (XZ) plane, and Figure 13(b) indicates the directivity of the conical plane when the elevation angle θ is 55 degrees.

In Figure 13(a), a directivity 421 indicated in full line shows the directivity of the E φ component in the case of exciting the linear loop antenna with detour elements 130 from the first feeding port 140 and shorting the second feeding port 141, where it is verifiable that the main beam tilted in the direction in which the elevation angle θ is 55 degrees on the + X side can be obtained. A directivity 422 indicated in dotted line shows the directivity of the E φ component in the case of exciting the linear loop antenna with detour elements 130 from the second feeding port 141 and shorting the first feeding port 140, where it is verifiable that the main beam tilted in the direction in which the elevation angle θ is 55 degrees on the - X side can be obtained.

In Figure 13(b), as with the directivity 421 in Figure 13(a), a directivity 423 indicated in full line shows the directivity of the E φ component in the case of exciting the linear loop antenna with detour elements 130 from the first feeding port 140 and shorting the second feeding port 141, where it is verifiable that the main beam is facing the + X direction. As with the directivity 422 in Figure 13(a), a directivity 424 indicated in dotted line shows the directivity of the E φ component in the case of exciting the linear loop antenna with detour elements 130 from the second feeding port 141 and shorting the first feeding port 140, where it is verifiable that the main beam is facing the - X direction. In this case, a directivity gain of the main beam is 10.5 dBi, a half-value angle of the conical plane is 57 degrees, and an F/B ratio (ratio between the main beam and a back lobe) is 7 dB.

Figures 14 are diagrams showing the directivity of the linear loop antenna with detour elements 131 of the antenna device 13 according to the third embodiment. Figure 14(a) indicates the directivity of the vertical (XZ) plane, and Figure 14(b) indicates the directivity of the conical plane when the elevation angle θ is 25 degrees.

In Figure 14(a), a directivity 521 indicated in full line shows the directivity of the E φ component in the case of exciting the linear loop antenna with detour elements 131 from a first feeding port 142 and shorting a second feeding port 143, where it is verifiable that the main beam tilted in the direction in which the elevation angle θ is 25 degrees on the + X side can be obtained. A directivity 522 indicated in dotted line shows the directivity of the E φ component in the case of exciting the linear loop antenna with detour elements 131 from the second feeding port 143 and shorting the first feeding port 142, where it is verifiable that the main beam tilted in the direction in which the elevation angle θ is 25 degrees on the - X side can be obtained.

In Figure 14(b), as with the directivity 521 in Figure 14(a), a directivity 523 indicated in full line shows the directivity of the E φ component in the case of exciting the linear loop antenna with detour elements 131 from the first feeding port 142 and shorting the second feeding port 143, where it is verifiable that the main beam is facing the + X direction. As with the directivity 522 in Figure 14(a), a directivity 524 indicated in dotted line shows the directivity of the E φ component in the case of exciting the linear loop antenna with detour elements 131 from the second feeding port 143 and shorting the first feeding port 142, where it is verifiable that the main beam is facing the - X direction.

The linear loop antenna with detour elements 130 is placed so that the XY plane thereof is in a position where it is away from the reflector 123 to the + Z side by a distance h₁ equivalent to approximately 0.42 free space wavelength (5.0 mm). In comparison, the linear loop antenna with detour elements 131 is placed so that the XY plane thereof is in a position where it is away from the reflector 123 to the + Z side by a distance h₂ equivalent to approximately 0.13 free space wavelength (1.5 mm). Therefore, the positions of the image wave sources 302a and 302b in Figure 4 change due to the difference in the distance from the reflector 123. Thus, the radiation of the linear loop antenna with detour elements 131 is formed in the direction of the directivity of the vertical (XZ) plane tilted just by the tilt angle α (25 degrees) which is shallower than the linear loop antenna with detour elements 130 from the ± Z directions.

Thus, according to the third embodiment, the linear loop antenna with detour elements 130 and 131 are provided with the linear alternative elements 102a and 102b in the folded shape on the symmetric axis which connects the linear loop elements 101a to 101d formed in the square shape with a set of opposed vertexes of the square shape, has the reflector 123 placed at a predetermined distance from the square shape, and has the feeding ports 140 to 143 on another set of vertexes so as to excite the antenna device 13 from one of the feeding ports and operate the other feeding port to be shorted. The linear loop antenna with detour elements 130 and 131 can switch the main beam in two directions by switching between their respective two feeding ports. Furthermore, a plurality (N pieces) of the linear loop antenna with detour elements 130 and 131 are placed so that all the symmetric axes of the linear loop antenna with detour elements 130 and 131 face the same direction while the distance from the reflector 123 is different as to each of the linear loop antenna with detour elements. Thus, the operation of feeding is switched by selecting at least one out of the feeding ports (2 x N pieces) of the linear loop antenna with detour elements so as to allow the main beams to be formed in 2 x N directions on the XZ plane. It is thereby possible to realize a multi-beam antenna of a small size and a planar structure.

To be more specific, because of the configuration of the antenna device 13 according to the third embodiment, it is possible, compared with the antenna device 10 of the first embodiment, to more selectively switch the feeding from the first feeding ports 140/142 and the second feeding ports 141/143 on each of the linear loop antenna with detour elements 130 and 131. It is possible, by selectively feeding the feeding ports 140 to 143 of the multiple linear loop antenna with detour elements 130 and 131, to realize an antenna device of a simple and low-cost configuration which forms the main beam in a desired direction.

The antenna device 10 of the first embodiment shown in Figures 1 forms the main beams in multiple different elevation angle directions on one of the + X side and the - X side on the XZ plane. In comparison, the antenna device 13 of the third embodiment can form the main beams in multiple different elevation angle directions on each orientation of the + X side and the - X side on the XZ plane. To be more specific, the antenna device 13 of the third embodiment can form multiple main beams over a larger area of the elevation angle directions.

The antenna device 13 of the third embodiment uses the common and planate reflector 123 as the reflector having the respective reflective portions opposed to the multiple linear loop antenna with detour elements. Therefore, it is possible to realize an antenna device of a low-cost and simple configuration which has the main beams in multiple elevation angle directions.

The linear loop antenna with detour elements 130 and 131 of the antenna device 13 of the third embodiment have the configuration in which the linear alternative elements 102a and 102b are connected to project outside of the square shape. However, the linear alternative elements 102a and 102b may also be connected to face the inside of the square shape as shown in Figure 7(a) of the first embodiment.

The linear loop elements 101a to 101d form the square shape. However, it may also be a rhombic, circular, elliptic shape or the like if the lengths of the linear loop elements and the linear alternative elements are set to appropriate lengths according to the operating frequency. The same effect as above can be obtained by a shape other than those in the case of the symmetrical shape to the symmetric axis.

The antenna device 13 of the third embodiment has the multiple linear loop antenna with detour elements 130 and 131 placed so that their respective symmetric axes are on the same YZ plane. However, they may also be placed to be in line in the X-axis direction as in Figures 8 or two-dimensionally placed. In that case, the same effect as above can be obtained by placing the linear loop antenna with detour elements so that their symmetric axes are parallel and in the same direction and the distances from the reflector are mutually different.

### (Fourth Embodiment)

Figures 15 and 16 are diagrams showing the configuration of the antenna device according to a fourth embodiment of the present invention. Hereafter, a description will be given on condition that the operating frequency of the antenna is 26 GHz. For convenience of description, the coordinate axes as shown in the drawings are defined.

Figure 15(a) is a perspective view showing the configuration of an antenna device 20 according to the fourth embodiment, and Figure 15(b) is an A to A' sectional view of Figure 15(a). Figure 16(a) is a top view of a slot loop antenna with detour elements formed on the dielectric substrate of the antenna device 20 according to the fourth embodiment, that is, a plan view viewed from the + Z side, and Figure 16(b) is a bottom view thereof, that is, a plan view viewed from the - Z side.

In Figure 15(a), a substrate 630 is a dielectric of which relative permittivity εr is 3.6 for instance and thickness is 0.3 mm. Hereafter, a description will be given on condition that 1 wavelength (1 equivalent wavelength) is 7.2 mm.

As shown in Figures 15, the antenna device 20 of the fourth embodiment includes two slot loop antenna with detour elements 600 and 610 formed on a common dielectric substrate 630 and a reflector 620.

The two slot loop antenna with detour elements 600 and 610 formed on the common dielectric substrate 630 are examples of the multiple antenna elements formed on the same plane of the present invention. Here, the reflector 620 includes multiple reflective planes opposed to the slot loop antenna with detour elements 600 and 610. The multiple reflective planes are examples of the multiple reflective portions of the present invention. And the reflector 620 with a different stage is an example of a reflector composed of the multiple reflective portions of the present invention.

A ground plane 640 is a copper foil layer attached to the + Z side of the dielectric substrate 630. Slot loop elements 601a to 601d are gaps (copper foil pattern) formed by denudating the ground plane 640, of which element length is approximately 1/2 wavelength (3.7 mm) and element width is 0.2 mm for instance. The slot loop elements 601a to 604d are laid out in the square shape as shown in Figure 16.

The slot alternative elements 602a and 602b are the gaps formed by denudating the ground plane 640 and folding, of which overall length is approximately 0.14 wavelength (1.0 mm), length L8 is approximately 0.07 wavelength (0.5 mm) and element width is 0.2 mm for instance. The slot alternative element 602a is connected between the slot loop element 601a and the slot loop element 601c, and the slot alternative element 602b is connected between the slot loop element 601b and the slot loop element 601d. Here, the slot alternative elements 602a and 602b are connected to project outside of the square shape. The slot loop element 601a and the slot loop element 601b are connected, and the slot loop element 601c and the slot loop element 601d are connected respectively.

The copper foil layer attached to the + Z side of the dielectric substrate 630 is an example of a conductor layer of the present invention. The slot loop elements 601a to 604d forming the square shape are examples of the loop elements formed by slots of the present invention. The slot alternative elements 602a and 602b are examples of a pair of the alternative elements formed by the slots of the present invention. The square shape formed by the slot loop elements 601a to 604d is an example of the rhombic shape of the present invention. The portion where the slot loop element 601a and the slot loop element 601c are close and the slot alternative element 602a is to be connected is an example of the part corresponding to an opposed peak of the rhombic shape on the symmetric axis of the present invention. The portion where the slot loop element 601b and the slot loop element 601d are close and the slot alternative element 602b is to be connected is also an example of the part corresponding to the opposed peak of the rhombic shape on the symmetric axis of the present invention. Both the portions of the slot alternative elements 602a and 602b that are connected to project outside of the square shape are examples of the projected portions of the present invention.

Therefore, as shown in Figures 16, the slot loop antenna with detour elements 600 and 610 of the fourth embodiment composed of the slot loop elements and the slot alternative elements have a line connecting the opposite angles of the square shape as the symmetric axis on which the slot alternative elements 602a and 602b are placed, and are in the symmetrical shape to the symmetric axis.

As shown in Figure 15(a), the multiple slot loop antenna with detour elements 600 and 610 thus configured are placed so that the symmetric axes thereof face the same direction.

On the ground plane 640 side, the portion of the copper foil layer inside the slot shown by hatching in Figure 15(a) is separated from the portion of the copper foil layer outside the slot by the slot. Thus, to avoid separating the portion of the copper foil layer inside the slot, the copper foil layer inside the slot loop is connected with the copper foil layer outside the slot loop as shown in Figure 16(a) so as to separate each of the slot loop elements 601a to 601d approximately at the centers of the slot loop elements 601a to 601d with connection conductors 701a to 701d which are formed in the square shape by the copper foil pattern.

Thus, the slot loop elements 601a to 601d are separated by the connection conductors 701a to 701d to connect the portion of the copper foil layer inside the slot with the portion of the copper foil layer outside the slot. It is thereby possible to realize an antenna device of which impedance matching is easy and F/B ratio is good.

Figures 17 show another configuration of the slot loop antenna with detour elements according to the fourth embodiment, where Figures 17(a) shows a top view and Figure 17(b) shows a bottom view respectively.

The slot loop antenna with detour elements of the configuration shown in Figures 17 is provided with a short pin 801 for bringing the portion of the copper foil layer of the ground plane 640 into conduction to the underside in the position shown in Figure 17(a). As shown in Figure 17(b), the portions of the copper foil layer inside and outside the slot are connected by a short line 802 connected to the short pin 801 of the conductor portion on the underside of the dielectric substrate 630.

It is also possible to thus connect the portion of the copper foil layer inside the slot with the portion of the copper foil layer outside the slot.

As in Figures 16, the slot loop antenna with detour elements 600 and 610 are composed of the slot loop elements 601a to 601d and the connection conductors 701a to 701d. Or else, they are composed of the slot loop elements 601a to 601d, the short pin 801 and the short line 802 as in Figures 17.

A micro strip line (MSL) 605 is formed by the copper foil pattern along the X-axis direction on the - Z side of the dielectric substrate 630 so as to pass through the position opposed to the connection between the slot loop element 601a and the slot loop element 601b. A width W1 of the micro strip line 605 is set at 0.6 mm so that a characteristic impedance thereof becomes 50 Ω. A distance L9 between the end of the micro strip line 605 and the connection between the slot loop element 601a and the slot loop element 601b is set at 0.45 mm for instance.

Similarly, as shown in Figure 16(b), the micro strip line 605 is also formed on the - Z side of the dielectric substrate 630 so as to pass through the position opposed to the connection between the slot loop element 601c and the slot loop element 601d.

In the slot loop antenna with detour elements 600, the micro strip line 605 is connected to a first feeding port 603 and a second feeding port 604 for feeding the slot loop antenna with detour elements 600. Similarly, in the slot loop antenna with detour elements 610, the micro strip line 605 is connected to a first feeding port 613 and a second feeding port 614 for feeding the slot loop antenna with detour elements 610.

The connection between the slot loop element 601a and the slot loop element 601b and the connection between the slot loop element 601c and the slot loop element 601d are examples of the predetermined positions of the loop elements according to the present invention respectively. The portion of the micro strip line 605 opposed to the predetermined positions by sandwiching the dielectric substrate 630 is an example of the feeding portion of the present invention provided close to the predetermined position.

The micro strip line 605 is electromagnetically connected with the slot antenna elements by having the above configuration. Therefore, signals from the first feeding ports 603 and 613 and the second feeding ports 604 and 614 can be supplied to the slot loop antenna with detour elements 600 and 610 via the micro strip line 605. And the impedance matching becomes possible by setting the distance L9 to an appropriate length.

Thus, it is possible, by using the antenna device 20 of the fourth embodiment, to facilitate the feeding from the micro strip line 605 which is a planar circuit and thereby miniaturize the antenna device and improve productivity thereof.

As shown in Figures 15, the reflector 620 is a conductor plate with a different stage including two parallel planes. As shown in Figure 15(b), a planar portion of the reflector 620 is placed in parallel with the dielectric substrate 630 so as to be in a position away from the dielectric substrate 630 to the - Z side by a distance h₁ equivalent to approximately 0.42 free space wavelength (5.0 mm) opposed to the slot loop antenna with detour elements 600. The other planar portion of the reflector 620 is placed in parallel with the dielectric substrate 630 so as to be in a position away from the dielectric substrate 630 to the - Z side by a distance h₂ equivalent to approximately 0.13 free space wavelength (1.5 mm) opposed to the slot loop antenna with detour elements 610.

Here, it is thinkable that the antenna device 20 of the fourth embodiment shown in Figures 15 is almost equivalent to the antenna device 13 shown in Figures 11 having its linear elements replaced by the slot elements, and the operation thereof can be described by replacing an electric field by a magnetic field. Therefore, a main polarized wave component of the antenna device 13 shown in Figures 11 is an Eφ component while the main polarized wave component of the antenna device 20 shown in Figures 15 is an Eθ component, where the shape of the main beam is the same as Figures 13 and 14.

Next, a description will be given as to the case where the antenna device 20 having the above-mentioned configuration is excited from the micro strip line 605.

Figures 18 are block diagrams of the dielectric substrate 630 portion in the case of providing a feeding change-over switch to the first feeding port 603 and the second feeding port 604 on the dielectric substrate 630 forming the slot loop antenna with detour elements 600. Figure 18(a) shows a plan view of the dielectric substrate 630 viewed from the + Z side, and Figure 18(b) shows a plan view thereof viewed from the - Z side.

As shown in Figure 18(b), a switch 760 is provided on the underside of the dielectric substrate 630. The switch 760 is connected to the micro strip line 605 by micro strip lines 605a and 605b which are formed on the underside of the dielectric substrate 630. The switch 760 is an example of a feeding switching portion of the present invention.

A signal excited from a feeding terminal 750 provided on the underside of the dielectric substrate 630 is inputted to a terminal 760a of the switch 760. In this case, the switch 760 operates so that the terminal 760a and a terminal 760c are connected and terminal 760b and a terminal 760d are connected respectively. For this reason, the signal inputted to the terminal 760a is inputted to the micro strip line 605a via the terminal 760c.

The micro strip line 605b is grounded via the terminal 760d and a terminal 760b. Here, the antenna element is composed of the slot elements, and so the electric field and the magnetic field in the case of the linear element can be replaced. Therefore, an opening state is necessary at a junction between the connection of the slot loop elements 601a and 601b and the micro strip line 605b. To realize the opening state in the position of the junction, it is necessary to set the entire electrical length to an odd multiple of a 1/4 wavelength. The entire electrical length in this case is the length from the junction between the connection of the slot loop elements 601a and 601b and the micro strip line 605b to a ground point, that is, the entire electrical length including the micro strip line 605b and the switch 760 to a ground plane 640 connected to a GND 770. It is possible, by having such a setup, to realize an antenna device which can obtain a good directivity gain with a good F/B ratio.

Similarly, in the case of exciting the antenna device 20 from the micro strip line 605b, the switch 760 operates so that the terminal 760a and a terminal 760d are connected and terminal 760b and a terminal 760c are connected respectively. In this case, it needs to be in an opening state at a junction between the connection of the slot loop elements 601c and 601d and the micro strip line 605a. To realize the opening state in the position of the junction, it is necessary to set to an odd multiple of a 1/4 wavelength the length from the junction between the connection of the slot loop element 601c and 601d and the micro strip line 605a to the ground point. It is possible, by having such a setup, to realize an antenna device which can obtain a good directivity gain with a good F/B ratio.

The fourth embodiment has been described as the switch using one DPDT switch (switch 760). It is also possible, however, to use multiple switches, such as configuring it by using two SPDTs (Single Pole Double Throw).

According to the fourth embodiment, it has been described that one terminal (GND 770) of the switch 760 is grounded, and the length from the junction between the micro strip line and the slot elements to the ground point is an odd multiple of a 1/4 wavelength. However, a configuration other than that may also be used. For instance, it is also possible to have a configuration in which one terminal of the switch is open, and the length from the junction between the micro strip line and the slot elements to the ground point is an integral multiple of a 1/2 wavelength so as to realize the opening state in the position of the junction between the micro strip line and the slot elements. A good directivity gain can also be obtained in the case of this configuration.

Thus, according to the fourth embodiment, the slot loop antenna with detour elements 600 and 610 are provided with the slot loop elements 601a to 601d formed in the square shape on the surface of the dielectric substrate 630 and the slot alternative elements 602a and 602b on a set of opposed vertexes of the square shape, has the micro strip line 605 placed on the backside of the dielectric substrate 630, and further has the reflector 620 placed at a predetermined distance from a slot loop element plane, and has the first feeding ports 603 and 613 and the second feeding ports 604 and 614 provided on the other set of vertexes respectively. The antenna device is excited from one of the feeding ports, and the other feeding port is operated to be shorted. And a plurality (N pieces) of the slot loop antenna with detour elements 600 and 610 are placed so that all the symmetric axes of the slot loop antenna with detour elements 600 and 610 face the same direction while the distance from the reflector 620 is different as to each of the slot loop antenna with detour elements. The operation of feeding is switched by selecting at least one out of the feeding ports (2 x N pieces) of each of the slot loop antenna with detour elements so as to allow the main beams to be formed in 2 x N directions. It is thereby possible to realize a multi-beam antenna of a small size and a planar structure.

To be more specific, because of the configuration of the antenna device 20 according to the fourth embodiment, a current phase lag occurs between the slot loop element 601a/the slot loop element 601b and the slot loop element 601c/the slot loop element 601d due to the slot alternative element 602a and the slot alternative element 602b in each of the slot loop antenna with detour elements 600 and 610. It is possible to form the main beams tilted from plane vertical directions of the slot loop antenna with detour elements 600 and 610 by combining the radio wave radiated by each of the slot loop antenna with detour elements 600 and 610 to which the current phase lag thus occurs with the radio wave reflected by the reflector 620. Furthermore, the slot loop antenna with detour elements 600 and 610 have different tilt angles because of different distances from the reflector 620. Therefore, it is possible, by selectively feeding the feeding ports 603, 604, 613 and 614 of the multiple slot loop antenna with detour elements 600 and 610, to realize an antenna device of a simple and low-cost configuration which forms the main beam in a desired direction.

It is possible, by having such a configuration, to facilitate the feeding from the micro strip line 605 which is a planar circuit and perform the impedance matching just by changing a micro strip line length. The configuration also allows miniaturization of the antenna device and improvement in productivity thereof.

Furthermore, it is possible to realize an antenna device of a simple configuration by forming the multiple slot loop antenna with detour elements on the same substrate and also forming the reflector with the same material having concavities and convexities. It is also possible, instead of providing the reflector, to use a metallic housing having a portion in the same shape as the reflector so as to utilize the portion of the housing in the same shape as the reflector.

The antenna device 20 according to the fourth embodiment has the configuration in which the multiple slot loop antenna with detour elements are formed on the common dielectric substrate 630. Therefore, it is possible to realize an antenna device of a low-cost and simple configuration which includes the main beams in multiple elevation angle directions.

According to the fourth embodiment, the positions for supplying the signals opposite the micro strip line 605 are the connection between the slot loop elements 601a and 601b and the connection between the slot loop elements 601c and 601d. However, it is possible to match the impedance by displacing the opposed positions thereof. The positions opposed to the micro strip line 605 can be displaced to match the impedance according to the surrounding circuit configuration. In the case of Figures 16 for instance, they can be placed to be opposed to the micro strip line 605 in the positions on the slot loop elements 601a and 601b or in the positions on the slot loop elements 601c and 601d.

According to the fourth embodiment, the reflector 620 with a different stage is used. However, it is also possible to form multiple slot loop antenna with detour elements on the substrates at different distances from the reflector respectively and render the reflector corresponding to each of the slot loop antenna with detour elements common and planate.

As for the slot loop antenna with detour elements 600 and 610 of the antenna device 20 according to the fourth embodiment, the slot alternative elements 602a and 602b are connected to project outside of the square shape. However, they may also be connected to face the inside of the square shape.

The slot loop elements 601a to 601d form the square shape. However, it may also be a rhombic, circular, elliptic shape or the like if the lengths of the slot loop elements and the slot alternative elements are set to appropriate lengths according to the operating frequency. The same effect as above can be obtained by a shape other than those in the case of the symmetrical shape to the symmetric axis.

The antenna device 20 of the fourth embodiment has the multiple slot loop antenna with detour elements 600 and 610 placed so that their respective symmetric axes are on the same YZ plane. However, they may also be placed to be in line in the X-axis direction or two-dimensionally placed. In that case, the same effect as above can be obtained by placing the slot loop antenna with detour elements so that their symmetric axes are parallel and the distances from the reflector are mutually different.

Each of the slot loop antenna with detour elements 600 and 610 of the fourth embodiment includes two feeding ports of the first feeding port and the second feeding port. However, each of the slot loop antenna with detour elements may have the feeding port only on one side to the symmetric axis as in the first and second embodiments.

According to the fourth embodiment, the slot loop antenna with detour elements 600 and 610 are formed on the common dielectric substrate 630. However, the configuration can be without the dielectric substrate 630 if the conductor portions of the slot loop antenna with detour elements 600 and 610 are formed by a material and a thickness capable of maintaining the shape on their own. In this case, even when there is nothing between a metal plate forming the slot loop antenna with detour elements and the reflector, the air existing in space thereof functions as the dielectric. It is also possible to provide a dielectric liquid or solid between the metal plate and the reflector.

### (Fifth Embodiment)

Figures 19 and 20 are diagrams showing the configuration of the antenna device according to a fifth embodiment of the present invention.

Figure 19(a) is a perspective view showing the configuration of an antenna device 21 according to the fifth embodiment. Figure 19(b) is an arrow view showing the configuration of the antenna device 21 according to the fifth embodiment, which is viewed from the arrow direction of Figure 19(a), that is, the + X side.

As shown in Figures 19, the antenna device 21 of the fifth embodiment includes two linear loop antenna with detour elements 132 and 133 and a reflector 908. The linear loop antenna with detour elements 132 is a conductor formed on a dielectric substrate 907, and the linear loop antenna with detour elements 133 is a conductor formed on a dielectric substrate 909.

Figure 20 is a plan view of the linear loop antenna with detour elements 132 viewed from the + Z-axis direction of Figures 19. The linear loop antenna with detour elements 133 has the same configuration as the linear loop antenna with detour elements 132.

The shape of the linear loop antenna with detour elements 132 and 133 of the antenna device 21 of the fifth embodiment will be described in detail. Hereafter, a description will be given as to the case where an antenna element is created on a dielectric substrate of εr = 2.26 for instance. The description will be given on condition that the operating frequency thereof is 26 GHz and 1 wavelength (1 equivalent wavelength) is 8.2 mm.

In Figure 20, linear loop elements 901a to 901d, 902a to 902d and 903a to 903d are conductors of which element length L11 is approximately 1/3 wavelength (2.7 mm) and element width is 0.2 mm for instance. The linear loop elements 901a to 901d, 902a to 902d and 903a to 903d are laid out in square shapes as shown in Figure 20 respectively.

Linear coupled elements 904a to 904d are conductors of which element length L12 is approximately 2/5 wavelength (3.2 mm) and element width is 0.2 mm for instance. The linear coupled element 904a is connected between the linear loop element 901a and the linear loop element 902b. The linear coupled element 904b is connected between the linear loop element 901b and the linear loop element 903a. The linear loop element 904c is connected between the linear loop element 901c and the linear loop element 902d. The linear coupled element 904d is connected between the linear loop element 901d and the linear loop element 903c.

Linear alternative elements 905a and 905b are conductors in the folded shape of which overall length is approximately 2/5 wavelength (3.2 mm), length L13 is approximately 1/5 wavelength (1.6 mm), and element width is 0.2 mm for instance. The linear alternative element 905a is connected between the linear loop element 902a and the linear loop element 902c. The linear alternative element 905b is connected between the linear loop element 903b and the linear loop element 903d.

The square-shaped portion formed by the linear loop elements 901a to 901d, the square-shaped portion formed by the linear loop elements 902a to 902d and the square-shaped portion formed by the linear loop elements 903a to 903d are examples of loop parts of the present invention respectively. The linear coupled elements 904a to 904d and the linear alternative elements 905a and 905b are examples of alternative parts of the present invention respectively. The configuration combining each loop part with a pair of the alternative parts connected to a diagonal portion of the loop part is an example of a component portion of the present invention. And the portion of the linear coupled elements 904a to 904d is an example of a portion in which the alternative parts are mutually coupled of the present invention.

A first feeding port 906a is provided between the linear loop elements 901a and 901b, and a second feeding port 906b is provided between the linear loop elements 901c and 901d. Moreover, the linear loop elements 902a and 902b, the linear loop elements 902c and 902d, the linear loop elements 903a and 903b, and the linear loop elements 903c and 903d are connected respectively.

The linear loop antenna with detour elements 132 is thus configured, in which an array is constituted by connecting square-shaped antenna element portions by the linear loop elements 901a to 901d, 902a to 902d and 903a to 903d, the linear coupled elements 904a to 904d, the linear alternative elements 905a and 905b and the first feeding port 906a and a second feeding port 906b configured as above. The linear loop antenna with detour elements 133 also has the same configuration.

In the case where the linear loop antenna with detour elements 132 is excited from the first feeding port 906a, the second feeding port 906b is shorted and operates to connect the linear loop elements 901c and 901d. Inversely, in the case where the linear loop antenna with detour elements 132 is excited from the second feeding port 906b, the first feeding port 906a is shorted and operates to connect the linear loop elements 901a and 901b. Thus, it is possible to switch the main beam in two directions with one linear loop antenna with detour elements 132 by switching between the first feeding port 906a and the second feeding port 906b and exciting the linear loop antenna with detour elements 132.

In Figures 19, a thickness t of the dielectric substrates 907 and 909 is approximately a 0.05 wavelength (0.4 mm), and the linear loop antenna with detour elements 132 and 133 are placed on the + Z side thereof.

The reflector 908 is a conductor plate. As shown in Figure 19(b), the linear loop antenna with detour elements 132 is placed in parallel with the reflector 908 so that an XY plane thereof is in a position away from the reflector 908 to the + Z side by a distance h₁ equivalent to approximately 0.42 free space wavelength (5.0 mm). The linear loop antenna with detour elements 133 is placed in parallel with the reflector 908 so that the XY plane thereof is in a position away from the reflector 908 to the + Z side by a distance h₂ equivalent to approximately 0.13 free space wavelength (1.5 mm).

Figures 21 are diagrams showing the directivity of the linear loop antenna with detour elements 132 shown in Figures 19 and 20. Figure 21(a) shows the directivity of the vertical (XZ) plane, and Figure 21(b) shows the directivity of the conical plane at an elevation angle θ of 55 degrees.

In Figure 21(a), a directivity 1001 indicated in full line shows the directivity of the E φ component in the case of exciting the linear loop antenna with detour elements 132 from the first feeding port 906a and shorting the second feeding port 906b, where it is verifiable that the main beam tilted in the direction in which the elevation angle θ is 55 degrees on the + X side can be obtained. A directivity 1002 indicated in dotted line shows the directivity of the E φ component in the case of exciting the linear loop antenna with detour elements 132 from the second feeding port 906b and shorting the first feeding port 906a, where it is verifiable that the main beam tilted in the direction in which the elevation angle θ is 55 degrees on the - X side can be obtained.

In Figure 21(b), as with the directivity 1001 in Figure 21(a), a directivity 1003 indicated in full line shows the directivity of the E φ component in the case of exciting the linear loop antenna with detour elements 132 from the first feeding port 906a and shorting the second feeding port 906b, where it is verifiable that the main beam is facing the + X direction. As with the directivity 1002 in Figure 21(a), a directivity 1004 indicated in dotted line shows the directivity of the E φ component in the case of exciting the linear loop antenna with detour elements 132 from the second feeding port 906b and shorting the first feeding port 906a, where it is verifiable that the main beam is facing the - X direction. In this case, a directivity gain of the main beam is 14.4 dBi, a half-value angle of the conical plane is 25 degrees, and an F/B ratio (ratio between the main beam and a back lobe) is 7 dB. Thus, the beam is thinner and a higher gain is realized in comparison with the case of the linear loop antenna with detour elements 130 of the third embodiment shown in Figure 13(b).

Because of the above configuration, even in the case of the antenna device 21 of the fifth embodiment using the linear loop antenna with detour elements 132 and 133 shown in Figures 19, it is possible to realize an antenna device of a simple and low-cost configuration and having multiple beams, which allows the main beam direction to be switched as with the antenna device 13 of the third embodiment shown in Figures 11.

To be more specific, the configuration of the antenna device 21 of the fifth embodiment allows a higher gain to be obtained by narrowing down a beam shape in the vertical direction to the main beam switch direction. Therefore, it is possible to reduce reflection from the ground in the case where the antenna device 21 is used for in-vehicle radar.

Furthermore, the linear loop antenna with detour elements 132 and 133 are array-configured. Therefore, the beam becomes thinner in a conical surface directivity of the tilt angle, and the configuration intended for a higher gain can be realized as a result.

In Figure 20, the case of three linear loop elements has been described. However, there may be any number of the elements within the range based on the aforementioned principle of operation.

It has been described that the antenna device 21 of the configuration shown in Figures 19 uses the linear loop antenna with detour elements 132 and 133 in the same shape. However, it is also possible to combine and use the linear loop antenna with detour elements in different shapes. For instance, it is also possible to combine and use the linear loop antenna with detour elements having different numbers of component portions in the square shape.

Figures 22 are diagrams showing the configuration of the antenna device of another configuration according to the fifth embodiment of the present invention. Figure 22(a) is a perspective view showing the configuration of an antenna device 22 of another configuration according to the fifth embodiment, and Figure 22(b) is an arrow view of the antenna device 22, which is viewed from the arrow direction of Figure 22(a), that is, the + X side. The same component parts as those in Figures 19 are given the same symbols.

As shown in Figure 22(a), the antenna device 22 shown in Figures 22 has the configuration which combines the linear loop antenna with detour elements 133 having three component portions in the square shape with a linear loop antenna with detour elements 134 having only one component portion in the square shape.

The linear loop antenna with detour elements tends to relatively increase a peak gain thereof as the distance from the reflector increases and the elevation angle formed in the beam direction becomes larger. And it tends to relatively decrease the peak gain thereof as the distance from the reflector decreases and the elevation angle formed in the beam direction becomes smaller.

The antenna device 22 shown in Figures 22 uses the linear loop antenna with detour elements 133 in an array-like shape as the antenna element provided in a position of a low elevation angle due to a small distance from the reflector 908 in order to obtain a higher gain. On the other hand, the linear loop antenna with detour elements 134 in a non-array-like shape is used as the antenna element provided in a position of a high elevation angle due to a large distance from the reflector 908.

Thus, the linear loop antenna with detour elements in different shapes are provided according to the distance from the reflector so as to allow their respective gains to be the same.

Furthermore, it is possible to reduce the size of the antenna device 22 by using the linear loop antenna with detour elements 134 in the non-array-like shape in comparison with the case of arranging the same linear loop antenna with detour elements in the array-like shape.

The fifth embodiment has described the example of configuring the alternative loop antenna element with the linear elements. However, the same effect can be obtained by configuring the alternative loop antenna element with the slots as in the fourth embodiment and rendering the shape of the slots as the shape in which the squares are connected like an array as in the fifth embodiment.

Furthermore, a concrete configuration thereof will be described below.

Figures 23 and 24 show the configuration of the antenna device of a further configuration according to the fifth embodiment using the slot loop antenna with detour elements in the shape of connecting the squares like an array.

Figure 23(a) is a perspective view showing the configuration of an antenna device 23 of the further configuration according to the fifth embodiment, and Figure 23(b) is an A to A' sectional view of Figure 23(a).

Figure 24(a) is a perspective view showing the configuration of an antenna device 24 of a still further configuration according to the fifth embodiment, and Figure 24(b) is an A to A' sectional view of Figure 24(a).

Both the antenna devices 23 and 24 shown in Figures 23 and 24 have a configuration in which only the shape of the slot loop antenna with detour elements is different from the antenna device 20 in Figures 15.

As shown in Figures 23, the antenna devices 23 of the fifth embodiment includes two slot loop antenna with detour elements 950 and 960 formed on a common dielectric substrate 980 and a reflector 970.

A ground plane 990 is a copper foil layer attached to the + Z side of the dielectric substrate 980. The slot loop antenna with detour elements 950 and 960 are gaps (copper foil pattern) formed by denudating the ground plane 990, which are in the shape of connecting three squares like an array as shown in Figure 23(a). The slot loop antenna with detour elements 950 and 960 are placed with lines connecting the opposite angles of the square shape on both ends as the symmetric axes so that the orientations of the symmetric axes are the same.

The portions of the copper foil layer inside the slot loop of the slot loop antenna with detour elements 950 and 960 indicated by hatching are connected with the portions of the copper foil layer outside the slot by the method shown in Figures 16 and 17 or the like.

A micro strip line (MSL) 955 is formed by the copper foil pattern on the - Z side of the dielectric substrate 980. The micro strip line 955 is formed along the X-axis direction so as to pass through a diagonal position of the square-shaped slot positioned at the center of the array-like configuration.

As shown in Figure 13(a), on the slot loop antenna with detour elements 950, the two micro strip lines 955 are formed to be connected to a first feeding port 956a and a second feeding port 956b for feeding the slot loop antenna with detour elements 950. Similarly, the slot loop antenna with detour elements 960 has two micro strip lines 955 formed thereon to be connected to a first feeding port 966a and a second feeding port 966b for feeding the slot loop antenna with detour elements 960.

Given the above configuration, the micro strip lines 955 and the slot antenna element are electromagnetically connected. Therefore, it is possible to supply the signals from the first feeding ports 956a and 966a and the second feeding ports 956b and 966b to the slot loop antenna with detour elements 950 and 960 via the micro strip lines 955.

Thus, it is possible, by using the antenna device 23 of such a configuration, to facilitate the feeding from the micro strip line 955 which is a planar circuit and thereby miniaturize the antenna device and improve productivity thereof as with the antenna device 20 of the fourth embodiment.

Furthermore, the slot loop antenna with detour elements 950 and 960 are array-configured. Therefore, the beam becomes thinner in terms of the conical surface directivity of the tilt angle, and the configuration intended for a higher gain can be realized as a result.

The antenna device 24 in Figures 24 is different from the antenna device 23 in Figures 23 only in the shape of one of the slot loop antenna with detour elements. In Figures 24, the same component parts as those in Figure 23 are given the same symbols.

As for the antenna device 24, a slot loop antenna with detour elements 951 in the shape of one square is formed on the dielectric substrate 980 instead of the slot loop antenna with detour elements 950 in the shape of three squares connected like an array of the antenna device 23. The slot loop antenna with detour elements 951 is in the same shape as the slot loop antenna with detour elements 600 of the antenna device 20 shown in Figures 15.

The antenna device 24 in Figures 24 uses the slot loop antenna with detour elements 960 in the array-like shape as the antenna element provided in a position of a low elevation angle due to a small distance from the reflector 970 in order to obtain a higher gain. On the other hand, the slot loop antenna with detour elements 951 in the non-array-like shape is used as the antenna element provided in a position of a high elevation angle due to a large distance from the reflector 970.

Thus, the slot loop antenna with detour elements in different shapes are provided according to the distance from the reflector so as to allow their respective gains to be obtained.

Furthermore, it is possible to reduce the size of the antenna device 24 by using the slot loop antenna with detour elements 951 in the non-array-like shape in comparison with the case of arranging the same slot loop antenna with detour elements in the array-like shape as in Figures 23.

### (Sixth Embodiment)

Figures 25 show an example of the layout of the antenna device 20 of the fourth embodiment and a monitoring area of a vehicle surrounding monitoring device which uses the antenna device 20 for vehicle radar according to the sixth embodiment of the present invention. Figure 25(a) is a diagram showing the layout of the antenna device 20, and Figure 25(b) is a diagram showing the monitoring area of the vehicle surrounding monitoring device including the antenna device 20 from above.

As shown in Figure 25(a), a vehicle surrounding monitoring device 1000 of the sixth embodiment including the antenna device 20 is placed around the center of the front of a vehicle, such as inside of a resin bumper which transmits a radio wave. The antenna device 20 is placed so that the Y-axis of the coordinate axes shown in Figures 15 faces the ground in the vertical direction and the Z-axis faces a forward travel direction of the vehicle.

As shown in Figures 25(b), such placement realizes a configuration in which one vehicle surrounding monitoring device 1000 can detect each of monitoring areas 1101 to 1104, such as detecting the monitoring area 1101 in the case of feeding the first feeding port 603 of the antenna device 20, detecting the monitoring area 1102 in the case of feeding the second feeding port 604, detecting the monitoring area 1103 in the case of feeding the first feeding port 613, and detecting the monitoring area 1104 in the case of feeding the second feeding port 614.

Because of the above configuration, the vehicle surrounding monitoring device 1000 of the sixth embodiment has a simple configuration with multiple beams, covers a very wide-angle area, and is capable of switching the main beam direction and judging whether or not an object exists by angular resolution of the beam.

Figure 26 shows a block diagram of the vehicle surrounding monitoring device 1000 according to the sixth embodiment.

In Figure 26, the vehicle surrounding monitoring device 1000 includes a timing control portion 1201, a transmission portion 1202 for transmitting a radio wave, a receiving portion 1203 for receiving a reflected signal, a processing portion 1204, a transmission/reception change-over switch 1206 for switching between transmission and reception, a driving status information storage portion 1207, a beam direction designation instrument 1208 and a feeding change-over switch 1209.

The transmission portion 1202, the receiving portion 1203, the processing portion 1204 and the beam direction designation instrument 1208 are controlled based on a timing signal from the timing control portion 1201. The feeding change-over switch 1209 is controlled based on the beam direction designation instrument 1208 and the transmission/reception change-over switch 1206.

As shown in Figures 15, the antenna device 20 has the two slot loop antenna with detour elements 600 and 610 placed so that the orientations of their symmetric axes are the same and the distance from the reflector 620 is different between the slot loop antenna with detour elements 600 and 610. The antenna device 20 includes 2 x 2 feeding ports (first feeding ports 603 and 613 and the second feeding ports 604 and 614). The feeding change-over switch 1209 controls switching of the feeding to the first feeding ports 603 and 613 and the second feeding ports 604 and 614 and thereby selects at least one out of the feeding ports to switch the feeding operation so as to allow the main beams to be formed in the 2 x 2 directions.

In Figure 26, the antenna device 20 is switched and shared in transmission and reception. Therefore, the antenna device 20 is an example of a transmission antenna portion of the present invention, and is also an example of a reception antenna portion of the present invention. The feeding change-over switch 1209 is an example of a feeding change-over portion of the present invention.

Furthermore, the driving status information storage portion 1207 has information on a speed sensor 1210, a rudder angle sensor 1220 and a switch (such as a direction indicator) 1230 to be operated by a driver stored therein. The beam direction designation instrument 1208 can also decide the beam direction based on the information of the driving status information storage portion 1207.

For instance, in the case where the driver steers to the left in Figures 25, that information is stored in the driving status information storage portion 1207 from the rudder angle sensor 1220. Based on that information, the beam direction designation instrument 1208 can feed the first feeding ports 603 or 613 by the feeding change-over switch 1209 and control the beam so as to monitor the monitoring area 1101 or 1103.

Or else, when the driver operates the direction indicator 1230 to the right, the beam direction designation instrument 1208 can feed the second feeding ports 604 or 614 by the feeding change-over switch 1209 based on that information and control the beam so as to monitor the monitoring area 1102 or 1104.

According to the sixth embodiment shown in Figures 25 and 26, only one antenna device 20 is installed, where the antenna device 20 is switched between transmission and reception by the transmission/reception change-over switch 1206 and shared in transmission and reception. It is also possible, however, to install two antenna devices for transmission and reception.

The transmitting side may also be composed of an arbitrary antenna having a broad directivity, such as a patch antenna.

A concrete configuration thereof will be described below.

Figure 27 shows a block diagram of a vehicle surrounding monitoring device 1010 of another configuration according to the sixth embodiment. The same component parts as those in Figure 26 are given the same symbols.

The vehicle surrounding monitoring device 1000 in Figure 26 uses the antenna device 20 for transmission as well as for reception. However, the vehicle surrounding monitoring device 1010 in Figure 27 uses the antenna device 20 for reception only, and uses a transmission patch antenna 1212 for transmission.

The transmission patch antenna 1212 has a broad directivity, and sends the main beams over a large area. The transmission patch antenna 1212 in this instance is an example of the antenna used by the transmission antenna portion in the case of sending a wide-angle single-beam radio wave of the present invention.

The vehicle surrounding monitoring device 1010 uses the antenna device 20 for reception only. Therefore, a timing control portion 1211 does not need to exert control to switch the antenna device 20 between transmission and reception. The timing control portion 1211 controls a feeding change-over switch 1219 in order to switch the direction of a reception beam received by the antenna device 20. To be more specific, the timing control portion 1211 has the feeding operation to the first feeding ports 603 and 613 and the second feeding ports 604 and 614 switched by the feeding change-over switch 1219 so as to control the direction of the reception beam.

As for the transmission, the timing control portion 1211 does not need to control the switching of a transmission beam, but has only to control transmission timing of the transmission portion 1202.

Thus, the vehicle surrounding monitoring device 1010 in Figure 27 does not need to switch the beam direction of the transmitting-side antenna. It can accurately detect the direction in which a subject exists just by switching the beam direction of the receiving-side antenna.

The sixth embodiment has been described as the configuration in which the vehicle surrounding monitoring device 1000 includes the antenna device 20 provided with the slot loop antenna with detour elements 600 and 610. However, the configuration may include the antenna device 13 of the third embodiment provided with the linear loop antenna with detour elements 130 and 131 instead of the antenna device 20. In this case, the same effect can be obtained by placing the antenna device 13 in the same direction as the antenna device 20 in Figures 25(a). The same effect can also be obtained by using another antenna device of the present invention described in the embodiments other than the sixth embodiment.

### (Seventh Embodiment)

Each of the antenna devices of the present invention indicated in the first to fifth embodiments may be provided within the substrate configuring another circuit.

Figures 28 show diagrams of a circuit board of the vehicle surrounding monitoring device described in the sixth embodiment having the antenna device of the present invention provided therein. Figure 28(a) shows a perspective view of the circuit board having each of the components of the vehicle surrounding monitoring device mounted thereon, and Figure 28(b) shows an B to B' sectional view of Figure 28(a) respectively.

A substrate 811 for the vehicle surrounding monitoring device is a six-layer board, where the components are mounted on both sides of the board. Figures 28 show an example of the substrate 811 provided with the configuration of the antenna device 20 of the fourth embodiment therein.

A slot element portion 823 shown in Figure 28(b) is a portion equivalent to the slot loop elements 601a to 601d and the slot alternative elements 602a and 602b of the slot loop antenna with detour elements 600 shown in Figures 15. The slot element portion 823 is formed in the second layer of the substrate 811. Moreover, the perspective view of Figure 28(a) only shows the slot element portion 823 of the second layer in broken line as to the portions of the second layer and under it. As the slot element portion 823 is a slot antenna, the second layer of the substrate 811 is a groundplane.

The first layer of the substrate 811 is a layer of a circuit line on which parts for the vehicle surrounding monitoring device are mounted, where the parts such as an IC 812 are mounted and a feed line 822 for feeding the slot element portion 823 is also formed. The feed line 822 is a portion equivalent to the micro strip line 605 of the slot loop antenna with detour elements 600 shown in Figures 15. A first slot loop antenna with detour elements portion 820 equivalent to the slot loop antenna with detour elements 600 in Figures 15 is constituted by the slot element portion 823 of the second layer and the feed line 822 of the first layer of the substrate 811. Within the substrate 811, a second slot loop antenna with detour elements portion 821 is also formed in the same configuration as the first slot loop antenna with detour elements portion 820.

The third layer of the substrate 811 is a layer of a circuit ground 824 on which a ground pattern for the circuit of the vehicle surrounding monitoring device is formed. The fifth layer of the substrate 811 is also a layer of a circuit ground 826 on which the ground pattern for the circuit of the vehicle surrounding monitoring device is formed. The fourth layer of the substrate 811 is a layer of a circuit line 825 on which the pattern for the circuit of the vehicle surrounding monitoring device is formed. The sixth layer of the substrate 811 is a layer of a circuit line 827 on which the pattern for the circuit of the vehicle surrounding monitoring device is formed. The layer of the circuit line 827 which is the backside of the substrate 811 has the parts for the vehicle surrounding monitoring device such as an IC 813 mounted thereon.

As shown in Figure 28(b), no conductive pattern is formed in the portion of the third to sixth layers of the substrate 811 which are under the area of the first slot loop antenna with detour elements portion 820.

The substrate 811 is mounted on a housing 810 so that a part of the metallic housing 810 (the part described as the "reflective portion" in Figure 28(b)) becomes parallel with the substrate 811.

The first slot loop antenna with detour elements portion 820 forms the beam in the elevation angle direction corresponding to the distance between the slot element portion 823 and the reflective portion of the housing 810 by regarding the reflective portion of the housing 810 as the portion equivalent to the reflector 620 of the antenna device 20 in Figures 15.

As for the portion under the area of the second slot loop antenna with detour elements portion 821 of the substrate 811, no conductive pattern is formed in the portion of the third and fourth layers. However, the fifth layer has a pattern of the circuit ground 826 formed to include the entire area under the second slot loop antenna with detour elements portion 821.

The second slot loop antenna with detour elements portion 821 forms the beam in the elevation angle direction corresponding to the distance between the slot element portion 823 and the reflective portion of the fifth layer by regarding the portion of the reflective portion of the fifth layer of the substrate 811 under the area as the portion equivalent to the reflector 620 of the antenna device 20 in Figures 15.

The distance between the first slot loop antenna with detour elements portion 820 and the reflective portion of the housing 810 is different from the distance between the second slot loop antenna with detour elements portion 821 and the reflective portion of the fifth layer of the substrate 811. Therefore, the elevation angles of the beams formed are different between the slot loop antenna with detour elements portions. As the distance between the first slot loop antenna with detour elements portion 820 and the reflective portion of the housing 810 is larger, the beam of a high elevation angle is formed by the first slot loop antenna with detour elements portion 820 while the beam of a low elevation angle is formed by the second slot loop antenna with detour elements portion 821.

Thus, it is possible to form multiple antennas having the beam directions of different elevation angles within the substrate 811 by providing a circuit portion 816 for mounting the parts for the vehicle surrounding monitoring device and forming the pattern and the portions of a first antenna portion 814 and a second antenna portion 815 within the substrate 811.

According to the seventh embodiment, the slot type antenna elements are formed within the substrate 811. However, it is also possible to form the pattern of a linear element type like the linear loop antenna with detour elements of the first embodiment within the substrate 811 so as to form the configuration equivalent to the antenna device 10 shown in Figures 1. It is also possible to form a loop antenna element in another shape as shown in Figures 7 or a loop antenna element in the array-like shape within the substrate as shown in Figures 19.

According to the seventh embodiment, the six-layer substrate 811 is used. However, the antenna device of the present invention can be configured within the substrate likewise by a multilayer board other than the six-layer substrate. According to the seventh embodiment, each of the slot loop antenna with detour elements portions is formed by using the first layer and the second layer of the substrate 811. However, it can also be formed by using two layers within the substrate other than those. In the case of forming the linear element type like the first embodiment, it is possible to form the portion corresponding to the first slot loop antenna with detour elements portion 820 with only one layer.

According to the seventh embodiment, a part of the housing 810 is used as the reflective portion of the first slot loop antenna with detour elements portion 820. However, it is also possible to use only the layers within the substrate as the reflective portion instead of using a part of the housing as the reflective portion. For instance, in the case of Figure 28(b), the ground pattern is formed in the portion opposed to the area of the slot element portion 823 of the sixth layer which is different from the reflective portion of the second slot loop antenna with detour elements portion 821 so as to use it as the reflective portion of the first slot loop antenna with detour elements portion 820.

Each of the embodiments has described the configuration in which the reflector of the antenna device of the present invention is the common and planate reflector with multiple antenna elements or the configuration in which multiple antenna elements are formed on the same plane. However, the antenna device of the present invention is not limited to these configurations, but the reflector and the plane on which the antenna elements are formed can have a different configuration as to each of the antenna devices.

For instance, it is possible to have a configuration in which one antenna element and a reflector opposed to it are one configuration, and a plurality of the configurations with differentiated distances between the antenna element and the reflector are made, and the configurations are arranged so that the directivity in the horizontal direction of the beams of the configurations becomes the same. Even in the case of having the configuration, the same effect as each of the embodiments can be obtained so that the antenna device of the present invention has a simple and low-cost configuration which includes multiple beams and is capable of switching the main beam direction.

### Industrial Applicability

The antenna device, the monitoring device and the vehicle according to the present invention have the effects of having no mechanical operating portion, being low-cost and having multiple beam directions in different elevation angle directions over a large area, and are useful as an antenna device utilized for the in-vehicle radar antenna or the like and a monitoring device, a vehicle and the like which utilize the antenna device.

## Claims

1. An antenna device including multiple antenna elements having a feeding portion respectively and multiple reflective portions opposed to each of the multiple antenna elements respectively, wherein:
each of the antenna elements is a conductor on each dielectric substrate and is formed on the same plane or on one of mutually parallel planes, and each of the antenna elements includes a loop element symmetrically placed like a loop with reference to a predetermined symmetric axis and a pair of alternative elements provided on the loop element on the symmetric axis;
the feeding portion is provided on the loop element on at least one side to the symmetric axis;
the symmetric axes of the antenna elements are mutually in the same direction;
each of the reflective portions is on the plane mutually parallel with each of the opposed antenna elements;
a distance between each of the antenna elements and each of the opposed reflective portions is different as to each of the antenna elements; and
a beam direction of each of the multiple antenna elements is mutually different since the distance from the reflector is different as to an elevation angle with reference to an axis perpendicular to the plane on which each of the antenna elements is formed.

2. The antenna device according to claim 1, wherein:
each of the antenna elements has the loop element and the pair of alternative elements formed by a slot which is formed by denudating a part of a conductor layer formed on a front face of each of the dielectric substrates; and
the feeding portion is provided in proximity to a predetermined position on the loop element on at least one side to the symmetric axis instead of the one provided on the loop element.

3. The antenna device according to claim 1 or 2, wherein the multiple reflective portions are composed of one reflector.

4. The antenna device according to claim 1 or 2, wherein:
the loop element is in a rhombic shape which has a part corresponding to an opposed vertex on the symmetric axis;
one side of the rhombic shape of the loop element is a 1/4 to 3/8 wavelength long; and
each of the pair of alternative elements is a 1/4 wavelength long, and is a projected portion in a folded shape provided toward inside or outside of the rhombic shape from the part corresponding to the vertex.

5. The antenna device according to claim 1 or 2, wherein:
the antenna element is composed of multiple component portions;
each of the component portions includes a loop part symmetrically placed like a loop with reference to the predetermined symmetric axis and a pair of alternative parts provided on the loop part to face outside of the loop part on the symmetric axis; and
each of the component portions is configured on the symmetric axis by mutually connecting the alternative parts.

6. The antenna device according to claim 5, wherein the number of the component portions of the antenna element is different as to each of the antenna elements.

7. The antenna device according to claim 2, wherein:
a micro strip line is provided on a backside of the dielectric substrate;
the loop element and the micro strip line are opposed by sandwiching the dielectric substrate in proximity to the predetermined position in which the feeding portion is provided;
each of the antenna elements includes a plurality of the feeding portions;
the antenna device further includes a feeding switching portion for switching the feeding portion for performing feeding out of the plurality of the feeding portions included in each of the antenna elements; and
the feeding switching portion is provided at a distance of an odd multiple of a 1/4 wavelength from the predetermined position on the micro strip line, and switches between short circuiting and feeding as to each of the feeding portions.

8. The antenna device according to claim 2, wherein:
a micro strip line is provided on the backside of the dielectric substrate;
the loop element and the micro strip line are opposed by sandwiching the dielectric substrate in proximity to the predetermined position in which the feeding portion is provided;
each of the antenna elements includes a plurality of the feeding portions;
the antenna device further includes a feeding switching portion for switching the feeding portion for performing feeding out of the plurality of the feeding portions included in each of the antenna elements; and
the feeding switching portion is provided at a distance of an integral multiple of a 1/2 wavelength from the predetermined position on the micro strip line, and switches between opening and feeding as to each of the feeding portions.

9. A monitoring device for sending a radio wave and receiving a radio wave reflected by the radio wave to detect an object or a human body as a subject, comprising:
a transmission antenna portion which sends a wide-angle single-beam radio wave or radio waves in multiple beam directions in a narrower range than that;
a reception antenna portion which includes the antenna device according to claim 1 or 2 and receives the radio waves transmitted by the transmission antenna portion and reflected by the subject in multiple beam directions;
a transmission portion which transmits a signal to be sent as the radio wave to the transmission antenna portion;
a receiving portion which has the radio wave received by the reception antenna portion transmitted as a signal from the reception antenna portion so as to detect it; and
a beam switching portion which controls switching of a feeding portion for performing feeding out of a plurality of the feeding portions included in multiple antenna elements of the antenna device and switches a direction of the radio wave to be received by the reception antenna portion so as to control a monitoring area.

10. The monitoring device according to claim 9, wherein:
the transmission antenna portion includes the antenna device according to claim 1 or 2 and sends the radio waves in multiple beam directions in a narrower range than the wide-angle single-beam radio wave; and
the beam switching portion also controls switching of the feeding portion for performing feeding out of a plurality of the feeding portions included in the multiple antenna elements of the antenna device included in the transmission antenna portion and switches the direction of the radio wave sent by the transmission antenna portion so as to control the monitoring area.

11. A vehicle on which the monitoring device according to claim 9 or 10 is mounted.

12. The vehicle according to claim 11, wherein the monitoring device is mounted in a position for monitoring the front of the vehicle in a direction in which the beam direction is switchable from side to side in front of the vehicle.
